# EUROPEAN PATENT APPLICATION

(11) **EP 4 425 796 A1**
(43) Date of publication of application: **04.09.2024**
(21) Application number: 22903411.1
(22) Date of filing: 05.12.2022
(51) Int. Cl.: H04B 1/38, H04B 1/40

(54) **FIRST DEVICE, SECOND DEVICE, SIGNAL TRANSMISSION METHOD AND WIRELESS ACCESS SYSTEM**

(30) Priority: 08.12.2021 CN 202111491504
(71) Applicant: Huawei Technologies Co., Ltd., Shenzhen, Guangdong 518129 (CN)
(72) Inventor: YU, Xiangqi, Shenzhen, Guangdong 518129 (CN); ZHAO, Xing, Shenzhen, Guangdong 518129 (CN); GUO, Chunlong, Shenzhen, Guangdong 518129 (CN); YANG, Bin, Shenzhen, Guangdong 518129 (CN)
(74) Representative: Gill Jennings & Every LLP
(86) International application number: PCT/CN2022/136679
(87) International publication number: WO 2023/103989

(57) **Abstract**

This application provides a first device, a second device, a signal transmission method, and a wireless access system. In solutions provided in this application, the first device can process a digital baseband signal into an analog radio frequency signal, and then transmit the analog radio frequency signal to a plurality of second devices through optical carriers. Therefore, no radio frequency circuit needs to be disposed in each second device, to effectively simplify a signal processing procedure of the second device, and reduce power consumption, a size, and costs of the second device. Correspondingly, power consumption and costs of the wireless access system can be significantly reduced; in addition, a quantity of second devices that can be connected to the first device can be increased, to effectively increase a coverage area of the wireless access system. In addition, the first device can directly transmit an analog radio frequency signal through an optoelectronic unit. In comparison with transmission of a digital baseband signal, because no additional control information needs to be transmitted, an effective radio frequency signal transmission bandwidth is improved.

## Description

This application claims priority to Chinese Patent Application No. 202111491504.4, filed on December 8, 2021 and entitled "FIRST DEVICE, SECOND DEVICE, SIGNAL TRANSMISSION METHOD, AND WIRELESS ACCESS SYSTEM", which is incorporated herein by reference in its entirety.

### TECHNICAL FIELD

This application relates to the communication field, and in particular, to a first device, a second device, a signal transmission method, and a wireless access system.

### BACKGROUND

An indoor distributed system is a wireless access system configured to improve quality of mobile communication in a building. The indoor distributed system usually includes a baseband unit (baseband unit, BBU), a radio hub (radio hub, RHUB), and a plurality of indoor distributed pico-remote radio units (pico-remote radio units, pRRUs).

The BBU is configured to send a downlink digital baseband signal to the RHUB, and the RHUB is configured to distribute the downlink digital baseband signal to each pRRU. The pRRU includes a radio frequency circuit (radio frequency circuit, RFC) and a plurality of antennas. The radio frequency circuit is configured to: after processing the received digital baseband signal into a plurality of radio frequency signals, radiate the plurality of radio frequency signals to an indoor terminal through the plurality of antennas.

However, as a quantity of antennas of the pRRU increases, power consumption of the radio frequency circuit continuously increases, and consequently, power consumption of the pRRU is high. Because each RHUB is connected to a large quantity of pRRUs, power consumption of the entire wireless access system is high.

### SUMMARY

This application provides a first device, a second device, a signal transmission method, and a wireless access system, to resolve a technical problem of high power consumption of a wireless access system in the related technology. Technical solutions are as follows:

According to a first aspect, a first device is provided. The first device includes a digital processing unit, a first digital-to-analog conversion unit, and a plurality of first optoelectronic units, where the digital processing unit is configured to: process a first downlink baseband signal transmitted by a baseband unit to obtain a first downlink digital signal, and transmit the first downlink digital signal to the first digital-to-analog conversion unit; the first digital-to-analog conversion unit is configured to: perform digital-to-analog conversion on the first downlink digital signal to obtain a first downlink analog radio frequency signal, and separately transmit the first downlink analog radio frequency signal to the plurality of first optoelectronic units; and the plurality of first optoelectronic units are connected to a plurality of second devices in one-to-one correspondence, and each of the plurality of first optoelectronic units is configured to: convert the first downlink analog radio frequency signal into a first downlink optical signal and transmit the first downlink optical signal to one connected second device.

Because the first device can directly transmit a downlink analog radio frequency signal through an optical carrier, no radio frequency circuit needs to be disposed in each second device, to effectively simplify a signal processing procedure of the second device, and reduce power consumption, a size, and costs of the second device. In addition, the first device directly transmits an analog radio frequency signal through an optoelectronic unit. In comparison with transmission of a digital baseband signal, because no additional control information needs to be transmitted, an effective radio frequency signal transmission bandwidth is improved.

Optionally, the first device further includes a selection unit, a second digital-to-analog conversion unit, and a plurality of second optoelectronic units, where the digital processing unit is further configured to: process a second downlink baseband signal transmitted by the baseband unit to obtain a second downlink digital signal, and transmit the second downlink digital signal to the second digital-to-analog conversion unit; the second digital-to-analog conversion unit is configured to perform digital-to-analog conversion on the second downlink digital signal to obtain a second downlink analog radio frequency signal; the selection unit is configured to separately transmit the second downlink analog radio frequency signal to the plurality of second optoelectronic units; and the plurality of second optoelectronic units are connected to a plurality of second devices in one-to-one correspondence, and each of the plurality of second optoelectronic units is configured to: convert the second downlink analog radio frequency signal into a second downlink optical signal and transmit the second downlink optical signal to one connected second device.

Each of the first digital-to-analog conversion unit and the second digital-to-analog conversion unit may correspond to one cell group, and each cell group includes one cell or a plurality of cells in different frequency bands. Correspondingly, the plurality of second devices connected to the plurality of first optoelectronic units are devices belonging to one cell group corresponding to the first digital-to-analog conversion unit, and the plurality of second devices connected to the plurality of second optoelectronic units are devices belonging to one cell group corresponding to the second digital-to-analog conversion unit.

The selection unit may adjust, based on a requirement of an application scenario and by adjusting a mapping relationship between each digital-to-analog conversion unit and the plurality of optoelectronic units, a quantity of second devices included in each cell group. In this way, a coverage area of each cell group can be flexibly adjusted.

Optionally, that the first digital-to-analog conversion unit separately transmits the first downlink analog radio frequency signal to the plurality of first optoelectronic units specifically includes: The first digital-to-analog conversion unit separately transmits the first downlink analog radio frequency signal to the plurality of first optoelectronic units through the selection unit.

Optionally, the first downlink baseband signal includes a signal of a first cell, and does not include a signal of a second cell; and the second downlink baseband signal includes the signal of the second cell, and does not include the signal of the first cell.

Because the digital processing unit can process downlink baseband signals of a plurality of different cells, centralized processing of the downlink baseband signals of the plurality of different cells is implemented. Therefore, signal processing efficiency is improved, and utilization of resources of the digital processing unit is improved.

Optionally, the first downlink digital signal includes a third downlink digital signal and a fourth downlink digital signal; and that the first digital-to-analog conversion unit performs digital-to-analog conversion on the first downlink digital signal to obtain a first downlink analog radio frequency signal specifically includes: The first digital-to-analog conversion unit performs digital-to-analog conversion on the third downlink digital signal to obtain a third downlink analog radio frequency signal; and the first digital-to-analog conversion unit performs digital-to-analog conversion on the fourth downlink digital signal to obtain a fourth downlink analog radio frequency signal, where a frequency band of the third downlink analog radio frequency signal is different from a frequency band of the fourth downlink analog radio frequency signal.

In a possible implementation, the third downlink digital signal and the fourth downlink digital signal may be signals of cells in different frequency bands. In another possible implementation, the second device has a plurality of signal transmit channels in a same frequency band, and the third downlink digital signal and the fourth downlink digital signal may be signals of a same cell. In this implementation, after the first digital-to-analog conversion unit may convert the third downlink digital signal and the fourth downlink digital signal into downlink analog radio frequency signals in different frequency bands, the first optoelectronic unit may transmit the two downlink analog radio frequency signals in the different frequency bands to the second device through one fiber core in a frequency division multiplexing manner. Therefore, a requirement on a quantity of fiber cores in an optical fiber in a multi-channel scenario is effectively lowered, to improve signal transmission flexibility and reduce signal transmission costs.

Optionally, the first device may further include a combiner unit and a signal transmission unit, where the signal transmission unit is configured to transmit a downlink analog signal; and the combiner unit is configured to: combine the first downlink analog radio frequency signal and the downlink analog signal, and transmit the combined signal to one of the plurality of first optoelectronic units, where a frequency band of the downlink analog radio frequency signal is different from a frequency band of the first downlink analog radio frequency signal, where the downlink analog signal includes at least one of the following signals: a control signal used to control a working status of one second device connected to the first optoelectronic unit; and a network signal from an internet protocol (internet protocol, IP) gateway.

The combiner unit combines the first downlink analog radio frequency signal and the downlink analog signal in the different frequency bands, so that the first optoelectronic unit can transmit the downlink analog radio frequency signal through the optical carrier, and can further transmit at least one of the control signal and the network signal through the optical carrier. The first device can implement, by using the control signal, centralized control on all the second devices connected to the first device. In addition, the first device can be flexibly networked with another type of network (for example, a Bluetooth network or a WLAN) to implement multi-network convergence.

Optionally, the baseband unit may further be configured to transmit a power consumption adjustment instruction to the digital processing unit; and the digital processing unit is further configured to adjust a working status of at least one unit of the first digital-to-analog conversion unit and the plurality of first optoelectronic units according to the power consumption adjustment instruction. For example, the digital processing unit may disable at least one unit according to the power consumption adjustment instruction, to reduce power consumption of the first device.

According to a second aspect, a first device is provided. The first device includes a plurality of first optoelectronic units, a first analog-to-digital conversion unit, and a digital processing unit, where the plurality of first optoelectronic units are connected to a plurality of second devices in one-to-one correspondence, and each of the plurality of first optoelectronic units is configured to perform optical-to-electrical conversion on a first uplink optical signal transmitted by one connected second device, to obtain a first uplink analog radio frequency signal; the first analog-to-digital conversion unit is configured to perform analog-to-digital conversion on first uplink analog radio frequency signals transmitted by the plurality of first optoelectronic units, to obtain a first uplink digital signal; and the digital processing unit is configured to: process the first uplink digital signal to obtain a first uplink baseband signal, and transmit the first uplink baseband signal to the baseband unit.

Optionally, the first device may further include a selection unit, a second analog-to-digital conversion unit, and a plurality of second optoelectronic units, where the plurality of second optoelectronic units are connected to a plurality of second devices in one-to-one correspondence, and each of the plurality of second optoelectronic units is configured to perform optical-to-electrical conversion on a second uplink optical signal transmitted by one connected second device, to obtain a second uplink analog radio frequency signal; the selection unit is configured to: combine second uplink analog radio frequency signals transmitted by the plurality of second optoelectronic units, and then transmit the combined second uplink analog radio frequency signals to the second analog-to-digital conversion unit; the second analog-to-digital conversion unit is configured to perform analog-to-digital conversion on the combined second uplink analog radio frequency signals, to obtain a second uplink digital signal; and the digital processing unit is further configured to: process the second uplink digital signal to obtain a second uplink baseband signal, and transmit the second uplink baseband signal to the baseband unit.

Optionally, the selection unit is further configured to: combine the first uplink analog radio frequency signals transmitted by the plurality of first optoelectronic units, and then transmit the combined first uplink analog radio frequency signals to the first analog-to-digital conversion unit; and that the first analog-to-digital conversion unit performs analog-to-digital conversion on first uplink analog radio frequency signals transmitted by the plurality of first optoelectronic units, to obtain a first uplink digital signal specifically includes: The first analog-to-digital conversion unit performs analog-to-digital conversion on the combined first uplink analog radio frequency signals, to obtain the first uplink digital signal.

Optionally, the first uplink analog radio frequency signal includes a signal of a first cell, and does not include a signal of a second cell; and the second uplink analog radio frequency signal includes the signal of the second cell, and does not include the signal of the first cell.

Optionally, the first uplink analog radio frequency signal includes a third uplink analog radio frequency signal and a fourth uplink analog radio frequency signal, and a frequency band of the third uplink analog radio frequency signal is different from a frequency band of the fourth uplink analog radio frequency signal; and that the first analog-to-digital conversion unit performs analog-to-digital conversion on first uplink analog radio frequency signals transmitted by the plurality of first optoelectronic units, to obtain a first uplink digital signal specifically includes: The first analog-to-digital conversion unit performs analog-to-digital conversion on third uplink analog radio frequency signals transmitted by the plurality of first optoelectronic units, to obtain a third uplink digital signal; and the first analog-to-digital conversion unit performs analog-to-digital conversion on fourth uplink analog radio frequency signals transmitted by the plurality of first optoelectronic units, to obtain a fourth uplink digital signal.

Optionally, signals obtained through the optical-to-electrical conversion performed by one of the plurality of first optoelectronic units on a first uplink optical signal transmitted by one connected second device further include an uplink analog signal, and a frequency band of the uplink analog signal is different from a frequency band of the first uplink analog radio frequency signal transmitted by the first optoelectronic unit; and the first device further includes a splitter unit and a signal transmission unit, where the splitter unit is configured to: transmit the first uplink analog radio frequency signal transmitted by the first optoelectronic unit to the first analog-to-digital conversion unit, and transmit the uplink analog signal to the signal transmission unit; and the uplink analog signal includes at least one of the following signals: a signal that is reported by the second device connected to the first optoelectronic unit and that indicates a working status of the second device; and a network signal that is reported by the second device connected to the first optoelectronic unit and that is from an IP device.

Optionally, the baseband unit is further configured to transmit a power consumption adjustment instruction to the digital processing unit; and the digital processing unit is further configured to adjust a working status of at least one unit of the first analog-to-digital conversion unit and the plurality of first optoelectronic units according to the power consumption adjustment instruction.

For technical effects of the first device provided in the second aspect, refer to the related descriptions in the first aspect. Details are not described herein again.

According to a third aspect, a second device is provided. The second device includes an optoelectronic unit, a data processing unit, and a signal transmit unit, where the optoelectronic unit is configured to: be connected to a first device, and perform optical-to-electrical conversion on a downlink optical signal transmitted by the first device, to obtain a first downlink analog radio frequency signal in a first frequency band and a second downlink analog radio frequency signal in a second frequency band; the data processing unit is configured to shift the second downlink analog radio frequency signal to the first frequency band, to obtain a third downlink analog radio frequency signal in the first frequency band; and the signal transmit unit has a first antenna and a second antenna, and the signal transmit unit is configured to: transmit the first downlink analog radio frequency signal through the first antenna, and transmit the third downlink analog radio frequency signal through the second antenna.

The signal transmit unit has at least two signal transmit channels in a same frequency band, and each signal transmit channel is configured to transmit one downlink analog radio frequency signal. Each signal transmit channel may include a signal processing unit (for example, an amplifier and a filter) and an antenna.

After receiving a plurality of downlink analog radio frequency signals in different frequency bands, the data processing unit can obtain a plurality of downlink analog radio frequency signals in a same frequency band through frequency shifting operations. Therefore, the first device may transmit the downlink analog radio frequency signals in the different frequency bands through one fiber core in a frequency division multiplexing manner. In this way, it can be ensured that a plurality of signal transmit channels can be configured for the second device without increasing a quantity of fiber cores in the optical fiber, to ensure signal transmit performance of the second device.

Optionally, the second device further includes a coupling unit and a cascading interface unit, where the coupling unit is configured to: separately transmit the first downlink analog radio frequency signal to the data processing unit and the cascading interface unit, and separately transmit the second downlink analog radio frequency signal to the data processing unit and the cascading interface unit; and the cascading interface unit is configured to: be connected to a third device, and transmit the first downlink analog radio frequency signal and the second downlink analog radio frequency signal to the third device.

Because the second device may be connected to the third device through the cascading interface unit, a quantity of remote devices that can be connected to the first device can be effectively increased without increasing a quantity of optoelectronic units in the first device. Therefore, a coverage area of a wireless access system can be effectively improved, and resource utilization of the first device can be effectively improved.

Optionally, signals obtained through the optical-to-electrical conversion performed by the optoelectronic unit on the downlink optical signal further include a fourth downlink analog radio frequency signal in a third frequency band; the coupling unit is further configured to separately transmit the fourth downlink analog radio frequency signal to the data processing unit and the cascading interface unit; and the cascading interface unit is further configured to transmit the fourth downlink analog radio frequency signal to the third device, where neither the signal processed by the data processing unit nor the signal transmitted by the signal transmit unit includes the fourth downlink analog radio frequency signal.

The second device and the third device cascaded to the second device may be configured to transmit downlink analog radio frequency signals in different frequency bands, in other words, the second device and the third device may support different frequency bands. Therefore, expansion of a frequency band supported by the wireless access system can be implemented in a device cascading manner, to effectively improve flexibility of the frequency band expansion.

According to a fourth aspect, a second device is provided. The second device includes a signal receive unit, a data processing unit, and an optoelectronic unit, where the signal receive unit has a first antenna and a second antenna, and the signal receive unit is configured to: receive a first uplink analog radio frequency signal in a first frequency band through the first antenna, and receive a second uplink analog radio frequency signal in the first frequency band through the second antenna; the data processing unit is configured to shift the second uplink analog radio frequency signal to a second frequency band, to obtain a third uplink analog radio frequency signal in the second frequency band; and the optoelectronic unit is configured to: be connected to a first device, and perform electrical-to-optical conversion on the first uplink analog radio frequency signal and the third uplink analog radio frequency signal to obtain an uplink optical signal, and transmit the uplink optical signal to the first device.

Optionally, the second device further includes a cascading interface unit and a combiner unit, where the cascading interface unit is configured to: be connected to a third device, and receive a fourth uplink analog radio frequency signal transmitted by the third device; and the combiner unit is configured to: combine the first uplink analog radio frequency signal, the third uplink analog radio frequency signal, and the fourth uplink analog radio frequency signal, and transmit the combined signal to the optoelectronic unit; and that the optoelectronic unit performs electrical-to-optical conversion on the first uplink analog radio frequency signal and the third uplink analog radio frequency signal to obtain an uplink optical signal specifically includes: The optoelectronic unit performs electrical-to-optical conversion on the combined analog radio frequency signals transmitted by the combiner unit, to obtain the uplink optical signal, where a frequency band of the fourth radio frequency signal is different from the first frequency band and is different from the second frequency band; or a frequency band of the fourth radio frequency signal includes at least one of the first frequency band and the second frequency band.

For technical effects of the second device provided in the fourth aspect, refer to the related descriptions in the third aspect. Details are not described herein again.

According to a fifth aspect, a wireless access system is provided. The system includes a baseband unit, a first device, and a plurality of second devices, where the first device is the first device provided in the first aspect, and each of the plurality of second devices is the second device provided in the third aspect; or the first device is the first device provided in the second aspect, and each of the plurality of second devices is the second device provided in the fourth aspect.

Optionally, the system may further include a third device, where the third device is cascaded to one of the plurality of second devices through an optical fiber or a cable.

Optionally, each of the plurality of second devices is configured to: receive and transmit an analog radio frequency signal within a first frequency band range, and the third device is configured to: receive and transmit an analog radio frequency signal within a second frequency band range, where the first frequency band range and the second frequency band range do not overlap.

Optionally, the system may further include an IP gateway and an IP device, where the IP gateway is connected to the first device, and the IP device is connected to one of the plurality of second devices.

Optionally, the system may further include a fourth device, a multiplexer, a demultiplexer, and a fifth device. The fourth device is configured to transmit a first optical signal to the multiplexer. The multiplexer is configured to: multiplex the first optical signal and a plurality of second optical signals transmitted by the first device, and transmit the multiplexed signal to the demultiplexer, where a wavelength of the first optical signal is different from wavelengths of the plurality of second optical signals. The demultiplexer is configured to: demultiplex the multiplexed optical signals transmitted by the multiplexer, transmit the first optical signal obtained through the demultiplexing to the fifth device, and transmit, in one-to-one correspondence, the plurality of second optical signals obtained through the demultiplexing to the plurality of second devices, where the first optical signal is obtained by performing electrical-to-optical conversion on at least one of the following signals: a network signal and a digital baseband signal.

According to a sixth aspect, a signal transmission method is provided. The method is applied to a first device, and the method includes: processing a first downlink baseband signal transmitted by a baseband unit to obtain a first downlink digital signal; performing digital-to-analog conversion on the first downlink digital signal to obtain a first downlink analog radio frequency signal; and converting the first downlink analog radio frequency signal into a first downlink optical signal, and transmitting the first downlink optical signal to a plurality of second devices.

Optionally, the method further includes: processing a second downlink baseband signal transmitted by the baseband unit to obtain a second downlink digital signal; performing digital-to-analog conversion on the second downlink digital signal to obtain a second downlink analog radio frequency signal; and converting the second downlink analog radio frequency signal into a second downlink optical signal, and transmitting the second downlink optical signal to a plurality of second devices.

Optionally, the first downlink baseband signal includes a signal of a first cell, and does not include a signal of a second cell; and the second downlink baseband signal includes the signal of the second cell, and does not include the signal of the first cell.

Optionally, the first downlink digital signal includes a third downlink digital signal and a fourth downlink digital signal; and the performing digital-to-analog conversion on the first downlink digital signal to obtain a first downlink analog radio frequency signal specifically includes: performing digital-to-analog conversion on the third downlink digital signal to obtain a third downlink analog radio frequency signal; and performing digital-to-analog conversion on the fourth downlink digital signal to obtain a fourth downlink analog radio frequency signal, where a frequency band of the third downlink analog radio frequency signal is different from a frequency band of the fourth downlink analog radio frequency signal.

Optionally, the converting the first downlink analog radio frequency signal into a first downlink optical signal specifically includes: combining the first downlink analog radio frequency signal and a downlink analog signal; and converting the combined signal into the first downlink optical signal, where a frequency band of the downlink analog signal is different from a frequency band of the first downlink analog radio frequency signal, and the downlink analog signal includes at least one of the following signals: a control signal used to control a working status of one of the plurality of second devices; and a network signal from an IP gateway.

Optionally, the method may further include: adjusting a working status of at least one unit in the first device according to a power consumption adjustment instruction transmitted by the baseband unit.

According to a seventh aspect, a signal transmission method is provided. The method is applied to a first device, and the method includes: performing optical-to-electrical conversion on each of a plurality of received first uplink optical signals to obtain a plurality of first uplink analog radio frequency signals; performing analog-to-digital conversion on the plurality of first uplink analog radio frequency signals to obtain a first uplink digital signal; processing the first uplink digital signal to obtain a first uplink baseband signal; and transmitting the first uplink baseband signal to a baseband unit.

Optionally, the method further includes: performing optical-to-electrical conversion on each of a plurality of received second uplink optical signals to obtain a plurality of second uplink analog radio frequency signals; combining the plurality of second uplink analog radio frequency signals; performing analog-to-digital conversion on the plurality of combined second uplink analog radio frequency signals, to obtain a second uplink digital signal; processing the second uplink digital signal to obtain a second uplink baseband signal; and transmitting the second uplink baseband signal to the baseband unit.

Optionally, the performing analog-to-digital conversion on the plurality of first uplink analog radio frequency signals to obtain a first uplink digital signal specifically includes: combining the plurality of first uplink analog radio frequency signals; and performing analog-to-digital conversion on the plurality of combined first uplink analog radio frequency signals, to obtain the first uplink digital signal.

Optionally, the first uplink analog radio frequency signal includes a signal of a first cell, and does not include a signal of a second cell; and the second uplink analog radio frequency signal includes the signal of the second cell, and does not include the signal of the first cell.

Optionally, each of the plurality of first uplink analog radio frequency signals includes a third uplink analog radio frequency signal and a fourth uplink analog radio frequency signal, and a frequency band of the third uplink analog radio frequency signal is different from a frequency band of the fourth uplink analog radio frequency signal. The performing analog-to-digital conversion on the plurality of first uplink analog radio frequency signals to obtain a first uplink digital signal specifically includes: performing analog-to-digital conversion on the third uplink analog radio frequency signal in each first uplink analog radio frequency signal to obtain a third uplink digital signal; and performing analog-to-digital conversion on the fourth uplink analog radio frequency signal in each of first uplink analog radio frequency signal to obtain a fourth uplink digital signal.

Optionally, signals obtained through optical-to-electrical conversion on at least one first uplink optical signal further include an uplink analog signal, and a frequency band of the uplink analog signal is different from a frequency band of the first uplink analog radio frequency signal, where the uplink analog signal includes at least one of the following signals: a signal that is reported by one second device and that indicates a working status of the second device; and a network signal that is reported by one second device and that is from an IP device.

Optionally, the method further includes: adjusting a working status of at least one unit in the second device according to a power consumption adjustment instruction transmitted by the baseband unit.

According to an eighth aspect, a signal transmission method is provided. The method is applied to a second device, where the second device has a first antenna and a second antenna; and the method includes: performing optical-to-electrical conversion on a downlink optical signal transmitted by a first device, to obtain a first downlink analog radio frequency signal in a first frequency band and a second downlink analog radio frequency signal in a second frequency band; shifting the second downlink analog radio frequency signal to the first frequency band, to obtain a third downlink analog radio frequency signal in the first frequency band; and transmitting the first downlink analog radio frequency signal through the first antenna, and transmitting the third downlink analog radio frequency signal through the second antenna.

Optionally, the method may further include: transmitting both the first downlink analog radio frequency signal and the second downlink analog radio frequency signal to a third device.

Optionally, signals obtained through the optical-to-electrical conversion on the downlink optical signal may further include a fourth downlink analog radio frequency signal in a third frequency band; and the method may further include: transmitting the fourth downlink analog radio frequency signal to the third device, where neither the signal processed by the second device nor the signal transmitted by the second device includes the fourth downlink analog radio frequency signal.

According to a ninth aspect, a signal transmission method is provided. The method is applied to a second device, where the second device has a first antenna and a second antenna; and the method includes: receiving a first uplink analog radio frequency signal in a first frequency band through the first antenna, and receiving a second uplink analog radio frequency signal in the first frequency band through the second antenna; shifting the second uplink analog radio frequency signal to a second frequency band, to obtain a third uplink analog radio frequency signal in the second frequency band; performing electrical-to-optical conversion on the first uplink analog radio frequency signal and the third uplink analog radio frequency signal, to obtain an uplink optical signal; and transmitting the uplink optical signal to a first device.

Optionally, the method may further include: receiving a fourth uplink analog radio frequency signal transmitted by a third device; combining the first uplink analog radio frequency signal, the third uplink analog radio frequency signal, and the fourth uplink analog radio frequency signal; and the performing electrical-to-optical conversion on the first uplink analog radio frequency signal and the third uplink analog radio frequency signal, to obtain an uplink optical signal specifically includes: performing electrical-to-optical conversion on the combined analog radio frequency signals, to obtain the uplink optical signal, where a frequency band of the fourth radio frequency signal is different from the first frequency band and is different from the second frequency band; or a frequency band of the fourth radio frequency signal includes at least one of the first frequency band and the second frequency band.

According to a tenth aspect, a computer-readable storage medium is provided. The computer-readable storage medium includes instructions. When the instructions are run on a computer, the computer is enabled to perform the method according to any one of the sixth aspect to the ninth aspect.

According to an eleventh aspect, a computer program product is provided. The computer program product includes instructions. When the instruction are run on a computer, the computer is enabled to perform the method according to any one of the sixth aspect to the ninth aspect.

For technical effects of the solutions provided in the fifth aspect to the eleventh aspect, refer to the related descriptions in the first aspect and the third aspect. Details are not described in this application again.

In conclusion, this application provides a first device, a second device, a signal transmission method, and a wireless access system. In solutions provided in this application, the first device can process a digital baseband signal into an analog radio frequency signal, and then transmit the analog radio frequency signal to a plurality of second devices through optical carriers. Therefore, no radio frequency circuit needs to be disposed in each second device, to effectively simplify a signal processing procedure of the second device, and reduce power consumption, a size, and costs of the second device. Correspondingly, power consumption and costs of the wireless access system can be significantly reduced; in addition, a quantity of second devices that can be connected to the first device can be increased, to effectively increase a coverage area of the wireless access system. In addition, the first device can transmit an analog radio frequency signal through an optoelectronic unit. In comparison with transmission of a digital baseband signal, because no additional control information needs to be transmitted, an effective radio frequency signal transmission bandwidth is improved.

### BRIEF DESCRIPTION OF DRAWINGS

FIG. 1 is a schematic diagram of a structure of a wireless access system according to an embodiment of this application;
FIG. 2 is a schematic diagram of a structure of a first device according to an embodiment of this application;
FIG. 3 is a schematic diagram of a structure of another first device according to an embodiment of this application;
FIG. 4 is a schematic diagram of a structure of still another first device according to an embodiment of this application;
FIG. 5 is a schematic diagram of a structure of yet another first device according to an embodiment of this application;
FIG. 6 is a schematic diagram of a structure of yet another first device according to an embodiment of this application;
FIG. 7 is a schematic diagram of a structure of a second device according to an embodiment of this application;
FIG. 8 is a schematic diagram of a structure of another second device according to an embodiment of this application;
FIG. 9 is a schematic diagram of a structure of still another second device according to an embodiment of this application;
FIG. 10 is a schematic diagram of a structure of another wireless access system according to an embodiment of this application;
FIG. 11 is a schematic diagram of a structure of still another wireless access system according to an embodiment of this application;
FIG. 12 is a schematic diagram of a structure of yet another wireless access system according to an embodiment of this application;
FIG. 13 is a flowchart of a signal transmission method according to an embodiment of this application;
FIG. 14 is a flowchart of another signal transmission method according to an embodiment of this application;
FIG. 15 is a flowchart of still another signal transmission method according to an embodiment of this application; and
FIG. 16 is a flowchart of yet another signal transmission method according to an embodiment of this application.

### DESCRIPTION OF EMBODIMENTS

The following describes, with reference to the accompanying drawings, the solutions provided in embodiments of this application.

First, the following related terms in embodiments of this application are explained:
Baseband signal: an original electrical signal that is sent by a source (an information source, also referred to as a transmit end) and that is not modulated. In addition, all baseband signals in embodiments of this application are digital signals, and therefore are also referred to as digital baseband signals.
Digital signal: a signal obtained through processing such as carrier forming, filtering, variable-rate sampling, clipping, and carrier multiplexing on a baseband signal.
Radio frequency signal: an analog signal, with a specific frequency, obtained through modulation on a digital signal.
Combination: includes two manners, power combination and frequency band combination. Power combination means that energy (namely, powers) of a plurality of signals are superimposed together to obtain one signal. Frequency band combination means that a plurality of signals in different frequency bands are combined into one signal.
Splitting: includes two manners, power splitting and frequency band splitting. Power splitting means that one signal is equally or unequally split into a plurality of signals based on energy (namely, powers). Frequency band splitting means that one signal is split into different frequency bands.

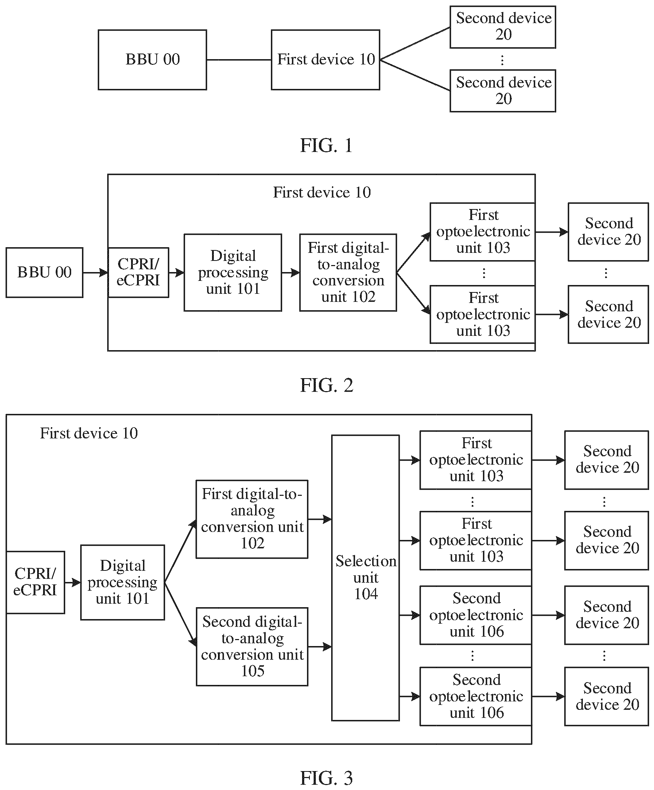

FIG. 1 is a schematic diagram of a structure of a wireless access system according to an embodiment of this application. The wireless access system may be an indoor wireless access system. Refer to FIG. 1. The wireless access system includes a BBU 00, a first device 10, and a plurality of second devices 20. The BBU 00 is connected to the first device 10, and is configured to transmit a downlink baseband signal to the first device 10. The first device 10 is connected to the plurality of second devices 20 through optical fibers. The first device 10 is configured to: process the downlink baseband signal into a downlink analog radio frequency signal, convert the downlink analog radio frequency signal into a downlink optical signal, and transmit the downlink optical signal to the plurality of second devices 20. Each second device 20 is configured to: convert the received downlink optical signal into the downlink analog radio frequency signal, and transmit the downlink analog radio frequency signal to a terminal (for example, a mobile phone) through an antenna.

In addition, each second device 20 is further configured to: receive, through the antenna, an uplink analog radio frequency signal transmitted by the terminal, convert the uplink analog radio frequency signal into an uplink optical signal, and transmit the uplink optical signal to the first device 10. The first device 10 is further configured to: convert the uplink optical signal into the uplink analog radio frequency signal, process the uplink analog radio frequency signal into an uplink baseband signal, and transmit the uplink baseband signal to the BBU 00.

It can be learned from the foregoing descriptions that an analog radio frequency signal can be transmitted between the first device 10 and the plurality of second devices 20 by using a radio over fiber (radio over fiber, RoF) technology. The first device 10 may also be referred to as an aggregation device, and the second device 20 may also be referred to as a remote device. For example, the first device 10 may be an RHUB, and the second device 20 may be a small remote radio unit (remote radio unit, RRU), for example, a pRRU.

FIG. 2 is a schematic diagram of a structure of a first device according to an embodiment of this application. The first device 10 may be used in the wireless access system shown in FIG. 1. Refer to FIG. 2. The first device 10 includes a digital processing unit 101, a first digital-to-analog conversion unit 102, and a plurality of first optoelectronic units 103.

The digital processing unit 101 is configured to: process a first downlink baseband signal transmitted by the BBU 00 to obtain a first downlink digital signal, and transmit the first downlink digital signal to the first digital-to-analog conversion unit 102.

The processing performed by the digital processing unit 101 on the first downlink baseband signal may include carrier forming, filtering, variable-rate sampling, clipping, carrier multiplexing, and the like. Optionally, as shown in FIG. 2, the first device 10 may further include a common public radio interface (common public radio interface, CPRI). The CPRI is connected to the BBU 00 through an optical fiber, and is configured to receive the first downlink baseband signal transmitted by the BBU 00 according to a CPRI protocol. After obtaining the first downlink baseband signal through the CPRI, the digital processing unit 101 further needs to deframe the first downlink baseband signal according to the CPRI protocol, and then processes the deframed first downlink baseband signal into the first downlink digital signal. Refer to FIG. 2. The interface that is of the first device 10 and that is configured to be connected to the BBU 00 may alternatively be an enhanced CPRI (enhanced CPRI, eCPRI). Correspondingly, after obtaining the first downlink baseband signal through the eCPRI, the digital processing unit 101 may deframe the first downlink baseband signal according to an eCPRI protocol. The eCPRI is an interface obtained by improving the CPRI.

The first digital-to-analog conversion unit 102 is configured to: perform digital-to-analog conversion on the received first downlink digital signal to obtain a first downlink analog radio frequency signal, and separately transmit the first downlink analog radio frequency signal to the plurality of first optoelectronic units 103.

First downlink analog radio frequency signals transmitted by the first digital-to-analog conversion unit 102 to all the first optoelectronic units 103 are the same. For example, the first digital-to-analog conversion unit 102 may split the first downlink analog radio frequency signal obtained through the digital-to-analog conversion into a plurality of signals based on a power, and separately transmit the plurality of first downlink analog radio frequency signals obtained through the power splitting to the plurality of first optoelectronic units 103.

As shown in FIG. 2, the plurality of first optoelectronic units 103 are connected to a plurality of second devices 20 in one-to-one correspondence, in other words, each first optoelectronic unit 103 is connected to one second device 20, and different first optoelectronic units 103 are connected to different second devices 20. Each of the plurality of first optoelectronic units 103 is configured to: convert the received first downlink analog radio frequency signal into a first downlink optical signal, and then transmit the first downlink optical signal to one connected second device 20.

In this embodiment of this application, each first optoelectronic unit 103 is connected to the second device 20 through an optical fiber, and is configured to: perform optical-to-electrical conversion on the received first downlink analog radio frequency signal to obtain the first downlink optical signal, and transmit the first downlink optical signal to the connected second device 20 through the optical fiber. In other words, each first optoelectronic unit 103 can transmit, through an optical carrier, the first downlink analog radio frequency signal to the second device 20 connected to the first optoelectronic unit 103. The first optoelectronic unit 103 is also referred to as an optical module, and the optical module may be a small form-factor pluggable (small form-factor pluggable, SFP) optical module, for example, may be a dual small form-factor pluggable (dual small form-factor pluggable, DSFP) optical module.

After receiving the first downlink optical signal, each second device 20 may perform optical-to-electrical conversion on the first downlink optical signal, to obtain the first downlink analog radio frequency signal. Then, the second device 20 may transmit the first downlink analog radio frequency signal through an antenna. Because the first device 10 can directly transmit the downlink analog radio frequency signal to the second device 20 through the optical carrier, a radio frequency circuit configured to process a digital baseband signal into an analog radio frequency signal does not need to be disposed in the second device 20. Therefore, power consumption, a size, and costs of the second device 20 are effectively reduced, to reduce deployment difficulty of the second device 20, and improve flexibility of deployment of the second device 20.

In this embodiment of this application, the first device 10 may be further configured to supply power to each second device 20 connected to the first device 10. Because a power supply capability of the first device 10 is limited, after the power consumption of each second device 20 is reduced, a quantity of second devices 20 that can be connected to the first device 10 can be effectively increased without improving the power supply capability of the first device 10, to effectively increase a coverage area of the wireless access system.

In addition, an RHUB in the related technology generally transmits a digital baseband signal to a pRRU through an optical carrier. Because the digital baseband signal is obtained through encoding according to the CPRI protocol, the RHUB further needs to additionally transmit control information. This helps the pRRU decode the obtained digital baseband signal. In addition, because the control information further needs to occupy a particular bandwidth, a transmission bandwidth of the digital baseband signal is limited. For example, assuming that a signal transmitted by the RHUB is obtained through compression by using a specific compression ratio in the CPRI protocol, an effective radio frequency signal transmission bandwidth of a digital optoelectronic unit with a transmission rate of 25 gigabits per second (Gbps) can only reach about 1.6 gigahertz (GHz). The compression ratio is a compression ratio used when a quantity of bits of a to-be-transmitted signal is compressed.

However, in this embodiment of this application, because the first device 10 can directly transmit the downlink analog radio frequency signal to the second device 20 through the optical carrier, another control signal does not need to be additionally transmitted. Therefore, an effective radio frequency signal transmission bandwidth is improved, and a signal transmission rate is ensured. For example, assuming that the first optoelectronic unit uses a laser having same performance as a 25 Gbps digital optoelectronic unit, an effective radio frequency signal transmission bandwidth of the first optoelectronic unit may theoretically reach about 10 GHz.

In conclusion, this embodiment of this application provides a first device. The first device can process a digital baseband signal into an analog radio frequency signal, and then transmit the analog radio frequency signal to a plurality of second devices through optical carriers. Therefore, no radio frequency circuit needs to be disposed in each second device, to effectively simplify a signal processing procedure of the second device, and reduce power consumption, a size, and costs of the second device. Correspondingly, power consumption and costs of the wireless access system can be significantly reduced; in addition, a quantity of second devices that can be connected to the first device can be increased, to effectively increase a coverage area of the wireless access system. In addition, the first device can transmit an analog radio frequency signal through an optoelectronic unit. In comparison with transmission of a digital baseband signal, because no additional control information needs to be transmitted, an effective radio frequency signal transmission bandwidth is improved.

Optionally, the digital processing unit 101 in the first device 10 may be an integrated circuit (integrated circuit, IC). For example, the digital processing unit 101 may include a central processing unit (central processing unit, CPU), a field programmable gate array (field programmable gate array, FPGA), and an application-specific integrated circuit (application-specific integrated circuit, ASIC).

FIG. 3 is a schematic diagram of a structure of another first device according to an embodiment of this application. As shown in FIG. 3, the first device 10 may further include a selection unit 104, a second digital-to-analog conversion unit 105, and a plurality of second optoelectronic units 106.

The digital processing unit 101 is further configured to: process a second downlink baseband signal transmitted by the BBU 00 to obtain a second downlink digital signal, and transmit the second downlink digital signal to the second digital-to-analog conversion unit 105.

The second digital-to-analog conversion unit 105 is configured to: perform digital-to-analog conversion on the second downlink digital signal to obtain a second downlink analog radio frequency signal, and transmit the second downlink analog radio frequency signal to the selection unit 104.

For a procedure of processing the second downlink baseband signal by the digital processing unit 101 and a procedure of processing the second downlink digital signal by the second digital-to-analog conversion unit 105, refer to the foregoing descriptions. Details are not described herein again.

Refer to FIG. 3. The selection unit 104 is separately connected to the second digital-to-analog conversion unit 105 and the plurality of second optoelectronic units 106, and is configured to separately transmit the received second downlink analog radio frequency signal to the plurality of second optoelectronic units 106.

For example, the selection unit 104 may split the second downlink analog radio frequency signal transmitted by the second digital-to-analog conversion unit 105 into a plurality of signals based on power splitting (which may be equal or unequal power splitting), and separately transmit the plurality of second downlink analog radio frequency signals obtained through the power splitting to the plurality of second optoelectronic units 106.

For example, it is assumed that the first device 10 includes m2 second optoelectronic units 106, and a power of the second downlink analog radio frequency signal received by the selection unit 104 is P. The selection unit 104 may equally split the second downlink analog radio frequency signal into m2 signals based on the power, and a power of each second downlink analog radio frequency signal obtained through the equal power splitting is P/m2, where m2 is an integer greater than 1.

The plurality of second optoelectronic units 106 are connected to a plurality of second devices 20 in one-to-one correspondence. Each of the plurality of second optoelectronic units 106 is configured to: convert the received second downlink analog radio frequency signal into a second downlink optical signal, and then transmit the second downlink optical signal to one connected second device 20.

For a structure and a function of each second optoelectronic unit 106, refer to the foregoing related descriptions about the first optoelectronic unit 103. Details are not described herein again.

In an example, each of the first digital-to-analog conversion unit 102 and the second digital-to-analog conversion unit 105 corresponds to one cell group, and each cell group includes one cell or a plurality of cells in different frequency bands. In addition, different digital-to-analog conversion units correspond to different cell groups. Each digital-to-analog conversion unit is configured to process a downlink digital signal of a cell group corresponding to the digital-to-analog conversion unit. Coverage areas of cells in each cell group may be the same, and coverage areas of different cell groups are different. For example, different cell groups may cover different indoor floors or different rooms.

Correspondingly, the plurality of second devices 20 connected to the plurality of first optoelectronic units 103 are devices belonging to one cell group corresponding to the first digital-to-analog conversion unit 102, and the plurality of second devices 20 connected to the plurality of second optoelectronic units 106 are devices belonging to one cell group corresponding to the second digital-to-analog conversion unit 105. If a cell group includes a plurality of cells in different frequency bands, each second device 20 belonging to the cell group may be configured to: receive and transmit an analog radio frequency signal in one of the frequency bands; or may be configured to: receive and transmit analog radio frequency signals in a plurality of the frequency bands; in other words, each second device 20 may support one or more frequency bands.

For a scenario in which the first device 10 further includes the selection unit 104, a process in which the first digital-to-analog conversion unit 102 separately transmits the first downlink analog radio frequency signal to the plurality of first optoelectronic units 103 may specifically include: The first digital-to-analog conversion unit 102 separately transmits the first downlink analog radio frequency signal to the plurality of first optoelectronic units 103 through the selection unit 104.

In other words, the first digital-to-analog conversion unit 102 may transmit the first downlink analog radio frequency signal to the selection unit 104, and the selection unit 104 may separately transmit the received first downlink analog radio frequency signal to the plurality of first optoelectronic units 103. For example, the selection unit 104 may split the first downlink analog radio frequency signal into a plurality of signals based on a power, and separately transmit the plurality of first downlink analog radio frequency signals obtained through the power splitting to the plurality of first optoelectronic units 103.

Optionally, the selection unit 104 may include a first power splitter, a second power splitter, and a switch array. The switch array may include a plurality of single-pole multi-throw switches. The first power splitter is separately connected to the first digital-to-analog conversion unit 102 and the switch array, and the second power splitter is separately connected to the second digital-to-analog conversion unit and the switch array. The switch array is further separately connected to the plurality of first optoelectronic units 103 and the plurality of second optoelectronic units 106.

It is assumed that the first device 10 includes m optoelectronic units in total, and the m optoelectronic units include m1 first optoelectronic units 103 and m2 second optoelectronic units 106, where m1, m2, and m are integers greater than 1. In this case, the first power splitter can split the received first downlink analog radio frequency signal into m signals based on the power and then transmit the m signals to the switch array, and the second power splitter can split the received second downlink analog radio frequency signal into m signals based on the power and then transmit the m signals to the switch array.

The switch array may separately transmit m1 first downlink analog radio frequency signals of the m first downlink analog radio frequency signals to the m1 first optoelectronic units 103, and separately transmit m2 second downlink analog radio frequency signals of the m second downlink analog radio frequency signals to the m2 second optoelectronic units 106. In other words, the switch array may transmit, based on a cell group to which each second device 20 belongs, m downlink analog radio frequency signals of each cell group to a plurality of optoelectronic units connected to the plurality of second devices 20 in the cell group. Alternatively, it may be understood that the switch array can map, to a plurality of corresponding optoelectronic units, a downlink analog radio frequency signal transmitted by each digital-to-analog conversion unit.

It may be understood that each second device 20 can belong to only one cell group in one time period, but may belong to different cell groups in different time periods. Therefore, in this embodiment of this application, the switch array in the selection unit 104 may further adjust, based on a requirement of an application scenario and by adjusting a mapping relationship between each digital-to-analog conversion unit and the plurality of optoelectronic units, a quantity of second devices 20 included in each cell group. In this way, a coverage area of each cell group can be flexibly adjusted.

For example, it is assumed that the m optoelectronic units included in the first device 10 are connected to m second devices 20 in one-to-one correspondence. In a first time period, a cell group 1 corresponding to the first digital-to-analog conversion unit 102 includes the first to n^{th} second devices 20, and a cell group 2 corresponding to the second digital-to-analog conversion unit 105 includes the (n+1)^{th} to m^{th} second devices 20. In the first time period, the selection unit 104 may separately transmit, to the first to n^{th} optoelectronic units, the first downlink analog radio frequency signal transmitted by the first digital-to-analog conversion unit 102; and may separately transmit, to the (n+1)^{th} to m^{th} optoelectronic units, the second downlink analog radio frequency signal transmitted by the second digital-to-analog conversion unit 105.

In a second time period, if a coverage area of the cell group 1 is expanded, a coverage area of the cell group 2 is reduced. The cell group 1 obtained through the coverage area expansion includes the first to (n+3)^{th} second devices 20, and the cell group 2 obtained through the coverage area reduction includes the (n+4)^{th} to m^{th} second devices 20. In the second time period, the selection unit 104 may separately transmit, to the first to (n+3)^{th} optoelectronic units, the first downlink analog radio frequency signal transmitted by the first digital-to-analog conversion unit 102; and may separately transmit, to the (n+4)^{th} to m^{th} optoelectronic units, the second downlink analog radio frequency signal transmitted by the second digital-to-analog conversion unit 105. n is a positive integer not greater than m.

It can be learned from the foregoing descriptions that, in the first time period, the first to n^{th} optoelectronic units are all first optoelectronic units 103, and the (n+1)^{th} to m^{th} optoelectronic units are all second optoelectronic units 106. In the second period, the first to (n+3)^{th} optoelectronic units are all first optoelectronic units, and the (n+4)^{th} to m^{th} optoelectronic units are all second optoelectronic units. In other words, in different time periods, the selection unit 104 can map downlink analog radio frequency signals transmitted by a same digital-to-analog conversion unit to different optoelectronic units, to flexibly adjust coverage areas of a cell group corresponding to the digital-to-analog conversion unit.

It may be understood that, a quantity of digital-to-analog conversion units included in the first device 10 may be greater than 2, and the first device 10 may further include more optoelectronic units. For each digital-to-analog conversion unit, the selection unit 104 may map, to a plurality of corresponding optoelectronic units based on the second device 20 included in the cell group corresponding to the digital-to-analog conversion unit, the downlink analog radio frequency signal transmitted by the digital-to-analog conversion unit.

In this embodiment of this application, it is assumed that a cell group corresponding to the first digital-to-analog conversion unit 102 includes a first cell, and a cell group corresponding to the second digital-to-analog conversion unit 105 includes a second cell. Therefore, a first downlink baseband signal processed by the digital processing unit 101 includes a signal of the first cell, and does not include a signal of the second cell. Similarly, a second downlink baseband signal processed by the digital processing unit 101 includes the signal of the second cell, and does not include the signal of the first cell.

Because the digital processing unit 101 can process downlink baseband signals of a plurality of different cells, centralized processing of the downlink baseband signals of the plurality of different cells is implemented. Therefore, signal processing efficiency is improved, and utilization of resources of the digital processing unit 101 is improved.

Optionally, a first downlink digital signal transmitted by the digital processing unit 101 to the first digital-to-analog conversion unit 102 may include a third downlink digital signal and a fourth downlink digital signal. Correspondingly, a process in which the first digital-to-analog conversion unit 102 performs digital-to-analog conversion on the first downlink digital signal to obtain the first downlink analog radio frequency signal may specifically include:
The first digital-to-analog conversion unit 102 performs digital-to-analog conversion on the third downlink digital signal to obtain a third downlink analog radio frequency signal, and performs digital-to-analog conversion on the fourth downlink digital signal to obtain a fourth downlink analog radio frequency signal.

In other words, the first downlink analog radio frequency signal may include the third downlink analog radio frequency signal and the fourth downlink analog radio frequency signal. In addition, a frequency band of the third downlink analog radio frequency signal is different from a frequency band of the fourth downlink analog radio frequency signal.

In a possible implementation, as described above, a cell group corresponding to the first digital-to-analog conversion unit 102 may include a plurality of cells in different frequency bands. Correspondingly, the third downlink digital signal and the fourth downlink digital signal may be signals of cells in different frequency bands.

For example, assuming that a cell group corresponding to the first digital-to-analog conversion unit 102 includes a cell whose frequency band is 3 GHz and a cell whose frequency band is 5 GHz, after performing digital-to-analog conversion on the third downlink digital signal, the first digital-to-analog conversion unit 102 may obtain a third downlink analog radio frequency signal whose frequency band is 3 GHz; and after performing digital-to-analog conversion on the fourth downlink digital signal, the first digital-to-analog conversion unit 102 may obtain a fourth downlink analog radio frequency signal whose frequency band is 5 GHz. The first digital-to-analog conversion unit 102 may transmit both the third downlink analog radio frequency signal and the fourth downlink analog radio frequency signal to the plurality of first optoelectronic units 103 through the selection unit 104.

In another possible implementation, the third downlink digital signal and the fourth downlink digital signal may be signals of a same cell. In this implementation, one second device 20 connected to each first optoelectronic unit 103 may be a multiple-input multiple-output (multiple-input multiple-output, MIMO) device. The MIMO device includes a plurality of signal transmit (transmit, TX) channels, each signal transmit channel may be configured to transmit one downlink analog radio frequency signal, and frequency bands of downlink analog radio frequency signals transmitted through the plurality of signal transmit channels may be the same. Each signal transmit channel may include a signal processing unit (for example, an amplifier and a filter) and an antenna.

If one second device 20 connected to a first optoelectronic unit 103 includes two signal transmit channels in a same frequency band, the first device 10 needs to transmit two downlink analog radio frequency signals in a same frequency band to the second device 20 through the first optoelectronic unit 103, for the two signal transmit channels for transmitting. If the first optoelectronic unit 103 directly transmits the two downlink analog radio frequency signals in the same frequency band through an optical carrier, two fiber cores in an optical fiber need to be occupied. When the second device 20 includes a large quantity of signal transmit channels, a high requirement is imposed on a quantity of fiber cores in the optical fiber. However, in this embodiment of this application, because the first digital-to-analog conversion unit 102 may convert the third downlink digital signal and the fourth downlink digital signal into downlink analog radio frequency signals in different frequency bands, the first optoelectronic unit 103 may transmit the two downlink analog radio frequency signals in the different frequency bands to the second device 20 through one fiber core in a frequency division multiplexing manner.

After receiving the two downlink analog radio frequency signals in the different frequency bands, the second device 20 may perform frequency shifting on one of the two downlink analog radio frequency signals, to obtain two downlink analog radio frequency signals in a same frequency band. Then, the second device 20 may transmit the two downlink analog radio frequency signals in the same frequency band through two signal transmit channels.

It may be understood that a quantity of cells that are in different frequency bands and that are included in one cell group corresponding to the first digital-to-analog conversion unit 102 may be greater than 2, and a quantity of signal transmit channels included in each second device 20 in the cell group corresponding to the first digital-to-analog conversion unit 102 may also be greater than 2. Therefore, a quantity of downlink digital signals included in the first downlink digital signal may be greater than 2, and a quantity of downlink analog radio frequency signals that are in different frequency bands and that are included in the first downlink analog radio frequency signal transmitted by the first digital-to-analog conversion unit 102 may also be greater than 2.

In this embodiment of this application, to improve signal transmission efficiency between the first device 10 and each second device 20, each first optoelectronic unit 103 may be connected to one second device 20 through a multi-core optical fiber. The multi-core optical fiber is an optical fiber including a plurality of fiber cores, and each first optoelectronic unit 103 may transmit a plurality of downlink analog radio frequency signals in parallel through the plurality of fiber cores. Each fiber core may be configured to transmit a plurality of downlink analog radio frequency signals in different frequency bands, and different fiber cores may transmit downlink analog radio frequency signals in different frequency bands, or may transmit downlink analog radio frequency signals in a same frequency band.

It is assumed that each first optoelectronic unit 103 is connected to one second device 20 through an M-core optical fiber, and each second device 20 includes N signal transmit channels. M is an integer greater than 1, for example, M=2 or 4; and N is an integer multiple of 2, for example, N=4 or 8. The first downlink digital signal transmitted by the digital processing unit 11 to the first digital-to-analog conversion unit 102 may include N downlink digital signals. After performing digital-to-analog conversion on the N downlink digital signals, the first digital-to-analog conversion unit 102 may obtain N downlink analog radio frequency signals (to be specific, the first downlink analog radio frequency signal includes the N downlink analog radio frequency signals). The N downlink analog radio frequency signals may be divided into M groups of analog radio frequency signals, and each group of analog radio frequency signals includes N/M downlink analog radio frequency signals in different frequency bands.

After receiving the M groups of analog radio frequency signals, each first optoelectronic unit 103 may perform electrical-to-optical conversion on the M groups of analog radio frequency signals to obtain a first downlink optical signal. The first downlink optical signal includes M downlink optical signals, and each downlink optical signal is obtained by performing electrical-to-optical conversion on a group of analog radio frequency signals. Then, each first optoelectronic unit 103 may transmit the M downlink optical signals through M fiber cores in the optical fiber respectively. In other words, the downlink optical signals transmitted through each fiber core carry N/M downlink analog radio frequency signals in different frequency bands.

After receiving the M downlink optical signals through the M fiber cores, the second device 20 may perform optical-to-electrical conversion on each downlink optical signal, to obtain the M groups of analog radio frequency signals. Each group of analog radio frequency signals includes the N/M downlink analog radio frequency signals whose frequency bands are different from each other. Then, the second device 20 may perform frequency shifting on one or more downlink analog radio frequency signals in each group of analog radio frequency signals, so that each group of analog radio frequency signals includes at least two signals in a same frequency band. For example, the second device 20 may shift frequency bands of each group of analog radio frequency signals to a same frequency band.

In this embodiment of this application, frequency bands of the N signal transmit channels included in the second device 20 may be the same or may not be completely the same, and each frequency band has at least two signal transmit channels. For example, it is assumed that the second device 20 includes N=8 signal transmit channels, where frequency bands of four signal transmit channels are 3 GHz, and frequency bands of the other four signal transmit channels are 5 GHz. If the first optoelectronic unit 103 is connected to the second device 20 through a 2-core optical fiber, that is, M=2, the first downlink digital signal transmitted by the digital processing unit 11 to the first digital-to-analog conversion unit 102 may include eight downlink digital signals. After performing digital-to-analog conversion on the eight downlink digital signals, the first digital-to-analog conversion unit 102 may obtain eight downlink analog radio frequency signals. The eight downlink analog radio frequency signals may be divided into two groups of analog radio frequency signals, and each group of analog radio frequency signals includes four downlink analog radio frequency signals in different frequency bands. For example, frequency bands of four downlink analog radio frequency signals in each group of analog radio frequency signals may be 3 GHz, 3.2 GHz, 5 GHz, and 5.2 GHz respectively.

After receiving the two groups of analog radio frequency signals, the first optoelectronic unit 103 may perform electrical-to-optical conversion on each group of analog radio frequency signals to obtain two downlink optical signals, where each downlink optical signal carries the four downlink analog radio frequency signals in the different frequency bands. Then, the first optoelectronic unit 103 may transmit the two downlink optical signals in parallel through two fiber cores in the optical fiber.

After receiving the two downlink optical signals through the two fiber cores, the second device 20 may perform optical-to-electrical conversion on each downlink optical signal, to obtain the two groups of analog radio frequency signals. Each group of analog radio frequency signals includes four downlink analog radio frequency signals whose frequency bands are different from each other. Then, for each group of analog radio frequency signals, the second device 20 may shift a frequency band of a 3.2 GHz downlink analog radio frequency signal to a 3 GHz frequency band, and shift a frequency band of a 5.2 GHz downlink analog radio frequency signal to a 5 GHz frequency band. Each group of analog radio frequency signals obtained through the frequency shifting includes two downlink analog radio frequency signals whose frequency bands are 3 GHz and two downlink analog radio frequency signals whose frequency bands are 5 GHz. In this way, the second device 20 may obtain four downlink analog radio frequency signals whose frequency bands are 3 GHz and four downlink analog radio frequency signals whose frequency bands are 5 GHz. The second device 20 may further transmit the four downlink analog radio frequency signals whose frequency bands are 3 GHz through four signal transmit channels whose frequency bands are 3 GHz, and transmit the four downlink analog radio frequency signals whose frequency bands are 5 GHz through four signal transmit channels whose frequency bands are 5 GHz.

It can be learned from the foregoing analysis that, in a scenario in which the second device is a multi-channel device or the second device supports a plurality of different frequency bands, in the solution provided in this embodiment of this application, a plurality of downlink analog radio frequency signals in different frequency bands may be transmitted in a frequency division multiplexing manner. Therefore, it can be ensured that the solution provided in this embodiment of this application can be flexibly applied to a multi-frequency band and multi-channel scenario without increasing a quantity of fiber cores in the optical fiber.

It may be understood that, if the first device 10 further includes the second digital-to-analog conversion unit 105, the second downlink digital signal transmitted by the digital processing unit 101 to the second digital-to-analog conversion unit 105 may include a fifth downlink digital signal and a sixth downlink digital signal. The second digital-to-analog conversion unit 105 may convert the two downlink digital signals into downlink analog radio frequency signals in different frequency bands, in other words, the second downlink analog radio frequency signal may also include the two analog radio frequency signals in the different frequency bands. For a working principle of the second digital-to-analog conversion unit 105, refer to the foregoing related descriptions about the first digital-to-analog conversion unit 102. For a working principle of the second optoelectronic unit 106, refer to the foregoing related descriptions about the first optoelectronic unit 103. Details are not described herein again.

In this embodiment of this application, each of the first digital-to-analog conversion unit 102 and the second digital-to-analog conversion unit 105 may include a digital-to-analog converter (digital-to-analog converter, DAC). If both the first digital-to-analog conversion unit 102 and the second digital-to-analog conversion unit 105 can generate a plurality of downlink analog radio frequency signals in different frequency bands, each digital-to-analog conversion unit may include a plurality of DACs, or may include one multi-channel DAC. Each DAC or each DAC channel may be configured to generate a downlink analog radio frequency signal in one frequency band.

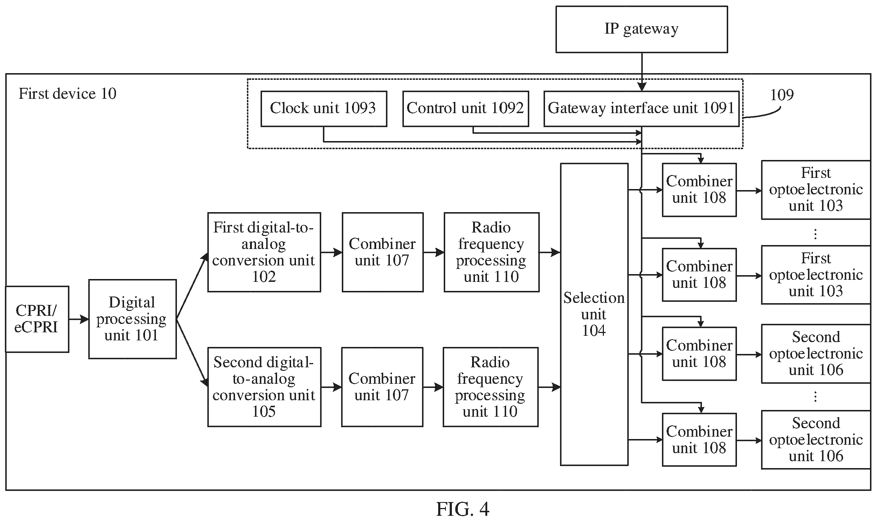

Optionally, as shown in FIG. 4, the first device 10 may further include a combiner unit 107 connected to the first digital-to-analog conversion unit 102 and a combiner unit 107 connected to the second digital-to-analog conversion unit 105. Each combiner unit 107 can combine a plurality of downlink analog radio frequency signals, in different frequency bands, transmitted by one digital-to-analog conversion unit connected to the combiner unit 107, and transmit the combined signal to the selection unit 104.

For example, it is assumed that the N downlink analog radio frequency signals transmitted by the first digital-to-analog conversion unit 102 can be divided into M groups of analog radio frequency signals, and each group of analog radio frequency signals includes N/M downlink analog radio frequency signals in the different frequency bands. In this case, one combiner unit 107 connected to the first digital-to-analog conversion unit 102 can combine the N/M downlink analog radio frequency signals in the different frequency bands in each group of analog radio frequency signals, and separately transmit M combined signals obtained through the combination to the plurality of first optoelectronic units 103 through the selection unit 104. After receiving the M combined signals, each first optoelectronic unit 103 may perform electrical-to-optical conversion on each combined signal to obtain M downlink optical signals.

It may be understood that, if the first digital-to-analog conversion unit 102 can transmit the M combined signals to the selection unit 104 through one combiner unit 107, the first power splitter in the selection unit 104 can split each received combined signal into m signals based on powers, and then transmit the m signals to the switch array. For example, one combiner unit 107 connected to the first digital-to-analog conversion unit 102 may include M combiners, and each combiner can combine one group of analog radio frequency signals in frequency domain, to obtain one combined signal. The first power splitter may include M power splitters. Each power splitter can split, into m signals based on powers, one combined signal output by one combiner, and then transmit the m signals to the switch array.

It may be further understood that, if the quantity of digital-to-analog conversion units included in the first device 10 is greater than 2, a quantity of combiner units 107 included in the first device 10 may also be greater than 2. In other words, the first device 10 may include a plurality of combiner units 107 that are connected to a plurality of digital-to-analog conversion units in one-to-one correspondence.

Optionally, as shown in FIG. 4, the first device 10 may further include a combiner unit 108 and a signal transmission unit 109. The signal transmission unit 109 is configured to transmit a downlink analog signal.

The combiner unit 108 is configured to: combine the first downlink analog radio frequency signal transmitted by the selection unit 104 and the downlink analog signal transmitted by the signal transmission unit 109, and transmit the combined signal to one first optoelectronic unit 103. A frequency band of the downlink analog signal is different from a frequency band of the first downlink analog radio frequency signal. In addition, the downlink analog signal may include at least one of the following signals: a control signal used to control a working status of one second device 20 connected to the first optoelectronic unit 103; and a network signal from an IP gateway. If the downlink analog signal includes a control signal and a network signal, a frequency band of the control signal is different from a frequency band of the network signal.

It may be understood that, if the first downlink analog radio frequency signal includes a plurality of downlink analog radio frequency signals in different frequency bands, a frequency band of the downlink analog signal is different from a frequency band of any downlink analog radio frequency signal.

As shown in FIG. 4, the signal transmission unit 109 may include a gateway interface unit 1091 and a control unit 1092. The gateway interface unit 1091 is connected to an IP gateway, and is configured to receive a network signal transmitted by the IP gateway, where the network signal transmitted by the IP gateway is a digital signal. The gateway interface unit 1091 is further configured to: convert, into an analog network signal, the digital network signal transmitted by the IP gateway, and then transmit the analog network signal to the combiner unit 108. Optionally, the IP gateway may be a Bluetooth gateway. Correspondingly, the network signal may be a Bluetooth signal; or the IP gateway may be a wireless local area network (wireless local area network, WLAN) gateway. Correspondingly, the network signal may be a WLAN signal.

The control unit 1092 can generate a control signal used to control a working status of any second device 20. For example, the control signal may be used to control a transmit power of the second device 20; may be used to control an enabling status of each signal transmit channel of the second device 20; or may be used to control the second device 20 to be on, be off, or hibernate. The control unit 1092 adjusts the working status of the second device 20 by using the control signal, to dynamically adjust power consumption of the second device 20.

Optionally, the gateway interface unit 1091 may include a gateway interface configured to be connected to the IP gateway, and a digital-to-analog converter configured to convert a digital network signal into an analog network signal. The control unit 1092 may be integrated with the digital processing unit 101, or the control unit 1092 may be independent of the digital processing unit 101. For example, the control unit 1092 may be an independent IC.

In this embodiment of this application, any second device 20 in the wireless access system may be further cascaded to a third device (namely, a next-level remote device). Correspondingly, the control unit 1092 can further generate a control signal used to control a working status of the third device, to dynamically adjust power consumption of the third device.

The combiner unit 108 combines the first downlink analog radio frequency signal and the downlink analog signal in the different frequency bands, so that the first optoelectronic unit 103 can transmit the downlink analog radio frequency signal through the optical carrier, and can further transmit at least one of the control signal and the network signal through the optical carrier. The first device 10 can implement, by using the control signal, centralized control on each second device 20 (and the third device cascaded to the second device 20) connected to the first device 10. In addition, the first device can be flexibly networked with another type of network (for example, a Bluetooth network or a WLAN) to implement multi-network convergence.

It may be understood that, as shown in FIG. 4, a quantity of combiner units 108 included in the first device 10 may be equal to a quantity of optoelectronic units in the first device 10, and the plurality of combiner units 108 in the first device 10 are connected to the plurality of optoelectronic units in one-to-one correspondence. Therefore, each optoelectronic unit can be enabled to transmit a control signal and/or a network signal to one second device 20 connected to the optoelectronic unit.

Optionally, the BBU 00 may be further configured to transmit a power consumption adjustment instruction to the first device 10. The digital processing unit 101 in the first device 10 is further configured to adjust a working status of at least one unit of the first digital-to-analog conversion unit 102 and the plurality of first optoelectronic units 103 according to the power consumption adjustment instruction.

In this embodiment of this application, for a cell group corresponding to the first digital-to-analog conversion unit 102, the BBU 00 may determine a service volume of the cell group based on received and sent baseband signals of the cell group. In addition, the BBU 00 may transmit the power consumption adjustment instruction to the first device 10 when detecting that the service volume of the cell group is low. The digital processing unit 101 in the first device 10 may further adjust, according to the power consumption adjustment instruction, the working status of the at least one unit of the first digital-to-analog conversion unit 102 and the plurality of first optoelectronic units 103. The adjusting a working status of at least one unit may be: enabling or disabling the at least one unit.

It may be understood that, when the service volume of the cell group corresponding to the first digital-to-analog conversion unit 102 is lower, the power consumption adjustment instruction transmitted by the BBU 00 may instruct the digital processing unit 101 to disable more first optoelectronic units 103, and correspondingly, power consumption of the first device 10 is lower. When the service volume of the cell group is lower than a threshold, for example, close to 0, the power consumption adjustment instruction can further instruct the digital processing unit 101 to disable the first digital-to-analog conversion unit 102, to further reduce the power consumption of the first device 10.

The disabled first optoelectronic unit 103 cannot transmit a downlink optical signal to the connected second device 20. Therefore, a larger quantity of first optoelectronic units 103 disabled by the digital processing unit 101 indicates a smaller quantity of second devices 20 that work normally in the cell group corresponding to the first digital-to-analog conversion unit 102. That the first digital-to-analog conversion unit 102 is disabled is equivalent to deleting the cell group corresponding to the first digital-to-analog conversion unit 102.

It may be further understood that, after the digital processing unit 101 disables a part of the first optoelectronic units 103, if the BBU 00 detects that the service volume of the cell group corresponding to the first digital-to-analog conversion unit 102 increases, the BBU 00 may further instruct, by using the power consumption adjustment instruction, the digital processing unit 101 to enable the disabled part of the first optoelectronic units 103, so as to ensure a communication requirement of the cell group.

In this embodiment of this application, the digital processing unit 101 may further instruct, according to the power consumption adjustment instruction transmitted by the BBU 00, the control unit 1092 to adjust, by using a control signal, a working status of at least one second device 20, and/or adjust a working status of a third device cascaded to the at least one second device 20. For example, if the service volume of the cell group corresponding to the first digital-to-analog conversion unit 102 is low, the control signal may indicate to disable at least one second device 20; may indicate to disable at least one signal transmit channel of a second device 20; or may indicate to disable a plurality of signal transmit channels, in a frequency band, of a second device 20.

It can be learned from the foregoing analysis that, in the solution provided in this embodiment of this application, according to the power consumption adjustment instruction transmitted by the BBU 00, the digital processing unit 101 can dynamically adjust, working statuses of all the units in the first device 10, and can dynamically adjust working statuses of the second devices 20 and third devices cascaded to the second device 20. Therefore, flexible configuration of a communication resource of the wireless access system can be implemented based on a service volume of each cell group, and dynamic scheduling of the communication resource can be implemented in a plurality of different dimensions such as a cell group level, a frequency band level, and a channel level.

In this embodiment of this application, if the first device 10 further includes the second digital-to-analog conversion unit 105 and the plurality of second optoelectronic units 106, the BBU 00 may further transmit the power consumption adjustment instruction to the first device 10 when detecting that a service volume of a cell group corresponding to the second digital-to-analog conversion unit 105 is low. The digital processing unit 101 may further control, according to the power consumption adjustment instruction, a working status of at least one unit of the second digital-to-analog conversion unit 105 and the plurality of second optoelectronic units 106.

It may be understood that, in a scenario in which the first device 10 includes a plurality of digital-to-analog conversion units, for each digital-to-analog conversion unit and a plurality of optoelectronic units connected to the digital-to-analog conversion unit, the digital processing unit 101 may adjust a working status of at least one of the units by using the method provided in the foregoing embodiment. In addition, for a cell group corresponding to each digital-to-analog conversion unit, the digital processing unit 101 may adjust a working status of each second device 20 in the cell group by using the method provided in the foregoing embodiment.

Optionally, as shown in FIG. 4, the first device 10 may further include a plurality of radio frequency processing units 110, and each radio frequency processing unit 110 is connected to one digital-to-analog conversion unit and the selection unit 104. For example, each radio frequency processing unit 110 is connected to one digital-to-analog conversion unit through one combiner unit 107. Each radio frequency processing unit 110 is configured to: process a downlink analog radio frequency signal transmitted by the combiner unit 107, and then transmit the processed downlink analog radio frequency signal to the selection unit 104. Each radio frequency processing unit 110 may include components such as an amplifier and an attenuator.

In this embodiment of this application, the digital processing unit 101 may further control a working status of at least one of the plurality of radio frequency processing units 110 according to the received power consumption adjustment instruction, to flexibly adjust the power consumption of the first device 10. For example, when detecting that a service volume of a cell group corresponding to a digital-to-analog conversion unit is lower than a threshold, the BBU 00 may instruct, by using the power consumption adjustment instruction, the digital processing unit 101 to disable a radio frequency processing unit 110 connected to the digital-to-analog conversion unit.

If the first device 10 further includes the gateway interface unit 1091, the digital processing unit 101 may further control a working status of the gateway interface unit 1091. For example, the digital processing unit 101 may disable the gateway interface unit 1091 according to a received configuration instruction.

In this embodiment of this application, the first device 10 may further include a clock unit 1093. The clock unit 1093 is configured to transmit a clock signal to each second device 20, so as to perform clock synchronization with each second device 20. Therefore, clock synchronization of the plurality of second devices 20 in the wireless access system can be implemented. The clock unit 1093 may be a component that can generate a clock signal, for example, may be a clock generator.

Optionally, as shown in FIG. 4, the clock unit 1093 may be connected to each combiner unit 108. Each combiner unit 108 can combine the clock signal and the first downlink analog radio frequency, and then transmit the combined signal to a corresponding optoelectronic unit.

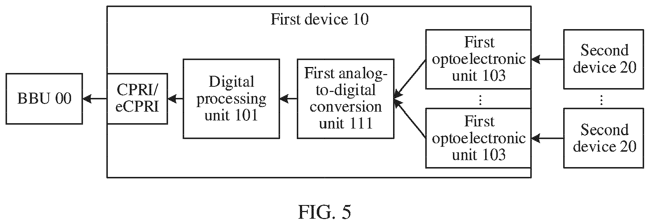

An embodiment of this application further provides another first device. The first device 10 may be used in the wireless access system shown in FIG. 1. Refer to FIG. 5. The first device 10 includes a plurality of first optoelectronic units 103, a first analog-to-digital conversion unit 111, and a digital processing unit 101.

The plurality of first optoelectronic units 103 are connected to a plurality of second devices 20 in one-to-one correspondence, and each of the plurality of first optoelectronic units 103 is configured to perform optical-to-electrical conversion on a first uplink optical signal transmitted by one connected second device 20, to obtain a first uplink analog radio frequency signal.

The first analog-to-digital conversion unit 111 is configured to perform analog-to-digital conversion on first uplink analog radio frequency signals transmitted by the plurality of first optoelectronic units 103, to obtain a first uplink digital signal.

For example, the first analog-to-digital conversion unit 111 may combine energy (namely, powers) of the first uplink analog radio frequency signals transmitted by the plurality of first optoelectronic units 103, and perform analog-to-digital conversion on the combined signal to obtain the first uplink digital signal.

The digital processing unit 101 is configured to: process the first uplink digital signal to obtain a first uplink baseband signal, and transmit the first uplink baseband signal to the BBU 00.

The processing performed by the digital processing unit 101 on the first uplink digital signal may include carrier forming, filtering, variable-rate sampling, carrier multiplexing, and the like. Optionally, if the first device 10 is connected to the BBU 00 through a CPRI, the foregoing processing may further include: performing framing on the first uplink digital signal according to a CPRI protocol. If the first device 10 is connected to the BBU 00 through an eCPRI, the foregoing processing may further include: performing framing on the first uplink digital signal according to an eCPRI protocol.

The first device 10 provided in this embodiment of this application can process an uplink analog radio frequency signal into an uplink baseband signal and then transmit the uplink baseband signal to the BBU 00. Therefore, a radio frequency circuit configured to process the uplink analog radio frequency signal into the uplink baseband signal does not need to be disposed in the second device. Therefore, a signal processing procedure of the second device is effectively simplified, and power consumption, a size, and costs of the second device are reduced. Correspondingly, power consumption and costs of the wireless access system can be significantly reduced; in addition, a quantity of second devices that can be connected to the first device can be increased, to effectively increase a coverage area of the wireless access system. In addition, the second device can directly transmit an analog radio frequency signal through an optoelectronic unit. In comparison with transmission of a digital baseband signal, an effective radio frequency signal transmission bandwidth is improved.

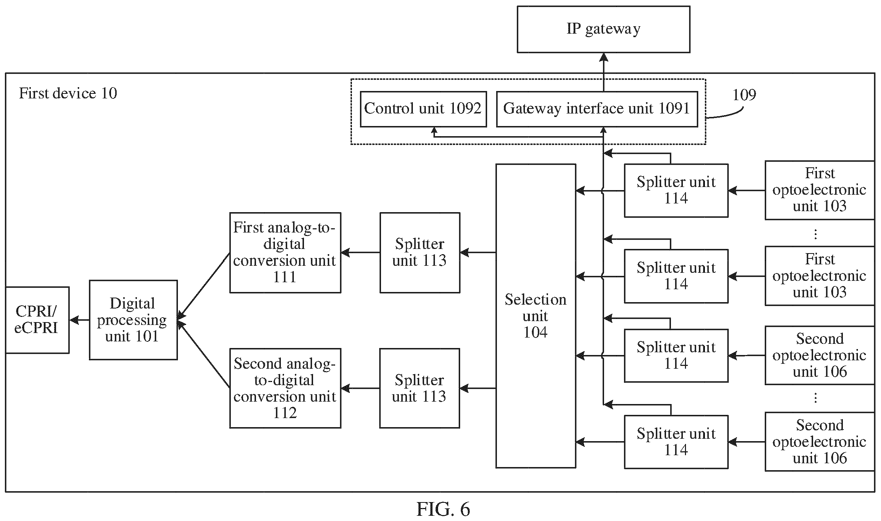

FIG. 6 is a schematic diagram of a structure of still another first device according to an embodiment of this application. As shown in FIG. 6, the first device 10 may further include a selection unit 104, a second analog-to-digital conversion unit 112, and a plurality of second optoelectronic units 106.

The plurality of second optoelectronic units 106 are connected to a plurality of second devices 20 in one-to-one correspondence, and each of the plurality of second optoelectronic units 106 is configured to perform optical-to-electrical conversion on a second uplink optical signal transmitted by one connected second device 20, to obtain a second uplink analog radio frequency signal.

The selection unit 104 is configured to: combine second uplink analog radio frequency signals transmitted by the plurality of second optoelectronic units 106, and then transmit the combined second uplink analog radio frequency signals to the second analog-to-digital conversion unit 112.

For example, the selection unit 104 may combine energy (namely, powers) of the second uplink analog radio frequency signals transmitted by the plurality of second optoelectronic units 106, and then transmit the combined second uplink analog radio frequency signals to the second analog-to-digital conversion unit 112.

The second analog-to-digital conversion unit 112 is configured to perform analog-to-digital conversion on the combined second uplink analog radio frequency signals, to obtain a second uplink digital signal.

The digital processing unit 101 is further configured to: process the second uplink digital signal to obtain a second uplink baseband signal, and transmit the second uplink baseband signal to a baseband unit.

For a procedure of processing the second uplink optical signal by each second optoelectronic unit 106, a procedure of processing the second uplink analog radio frequency signal by the second analog-to-digital conversion unit 112, and a procedure of processing the second uplink digital signal by the digital processing unit 101, refer to the foregoing descriptions. Details are not described herein again.

Optionally, the selection unit 104 may be further configured to: combine first uplink analog radio frequency signals transmitted by the plurality of first optoelectronic units 103, and then transmit the combined first uplink analog radio frequency signals to the first analog-to-digital conversion unit 111. For example, the selection unit 104 may combine energy (namely, powers) of the first uplink analog radio frequency signals transmitted by the plurality of first optoelectronic units 103. Correspondingly, a process in which the first analog-to-digital conversion unit 111 performs analog-to-digital conversion on the first uplink analog radio frequency signals transmitted by the plurality of first optoelectronic units 103 to obtain a first uplink digital signal may specifically include:

The first analog-to-digital conversion unit 111 performs analog-to-digital conversion on the combined first uplink analog radio frequency signals, to obtain the first uplink digital signal.

It may be understood that each of the first analog-to-digital conversion unit 111 and the second analog-to-digital conversion unit 112 corresponds to one cell group, and each cell group includes one cell or a plurality of cells in different frequency bands. In addition, the first analog-to-digital conversion unit 111 and the first digital-to-analog conversion unit 102 correspond to a same cell group, and the second analog-to-digital conversion unit 112 and the second digital-to-analog conversion unit 105 correspond to a same cell group.

Optionally, the selection unit 104 may include a first power combiner, a second power combiner, and a switch array, where the first power combiner is separately connected to the switch array and the first analog-to-digital conversion unit 111, and the second power combiner is separately connected to the switch array and the second analog-to-digital conversion unit 112. The switch array is further separately connected to the plurality of first optoelectronic units 103 and the plurality of second optoelectronic units 106.

Assuming that the first device 10 includes m1 first optoelectronic units 103 and m2 second optoelectronic units 106, the switch array may transmit, to the first power combiner, m1 first uplink analog radio frequency signals transmitted by the m1 first optoelectronic units 103; and may transmit, to the second power combiner, m2 second uplink analog radio frequency signals transmitted by the m2 second optoelectronic units 106. The first power combiner can further combine energy of the m1 first uplink analog radio frequency signals and then transmit the combined m1 first uplink analog radio frequency signals to the first analog-to-digital conversion unit 111, and the second power combiner can further combine energy of the m2 second uplink analog radio frequency signals and then transmit the combined m2 second uplink analog radio frequency signals to the second analog-to-digital conversion unit 112.

It can be learned from the foregoing analysis that the switch array in the selection unit 104 may transmit, based on a cell group to which each second device 20 belongs, a plurality of uplink analog radio frequency signals of each cell group to a same power combiner, and the power combiner combines energy of the plurality of uplink analog radio frequency signals of the same cell group, and then transmits the combined uplink analog radio frequency signals to a corresponding analog-to-digital conversion unit. Alternatively, it may be understood that the switch array can map, to a corresponding analog-to-digital conversion unit, uplink analog radio frequency signals transmitted by a plurality of optoelectronic units.

In this embodiment of this application, the selection unit 104 may further adjust, based on a requirement of an application scenario and by adjusting a mapping relationship between each analog-to-digital conversion unit and the plurality of optoelectronic units, a quantity of second devices 20 included in each cell group. In this way, a coverage area of each cell group can be flexibly adjusted.

It may be understood that the first device 10 provided in this embodiment of this application may include units (for example, the first digital-to-analog conversion unit 102 and the second digital-to-analog conversion unit 105) configured to process a downlink signal, and further include units (for example, the first analog-to-digital conversion unit 111 and the second analog-to-digital conversion unit 112) configured to process an uplink signal. Correspondingly, the selection unit 104 may include the first power combiner, the second power combiner, a first power splitter, a second power splitter, and the switch array. Both the power combiner and the power splitter may be power dividers.

In this embodiment of this application, it is assumed that a cell group corresponding to the first analog-to-digital conversion unit 111 includes a first cell, and a cell group corresponding to the second analog-to-digital conversion unit 112 includes a second cell. The first uplink analog radio frequency signal processed by the first analog-to-digital conversion unit 111 includes a signal of the first cell, and does not include a signal of the second cell. Similarly, the second uplink analog radio frequency signal processed by the second analog-to-digital conversion unit 112 includes the signal of the second cell, and does not include the signal of the first cell.

Correspondingly, the uplink digital signal processed by the digital processing unit 101 includes the signal of the first cell, and further includes the signal of the second cell. Therefore, centralized processing of uplink digital signals of a plurality of different cells is implemented. This improves signal processing efficiency, and further improves resource utilization of the digital processing unit 101.

Optionally, the first uplink analog radio frequency signal transmitted by each first optoelectronic unit 103 may include a third uplink analog radio frequency signal and a fourth uplink analog radio frequency signal, and a frequency band of the third uplink analog radio frequency signal is different from a frequency band of the fourth uplink analog radio frequency signal. Correspondingly, a process in which the first analog-to-digital conversion unit 111 performs analog-to-digital conversion on the first uplink analog radio frequency signals transmitted by the plurality of first optoelectronic units 103 to obtain the first uplink digital signal may specifically include:

The first analog-to-digital conversion unit 111 performs analog-to-digital conversion on third uplink analog radio frequency signals transmitted by the plurality of first optoelectronic units 103 to obtain a third uplink digital signal. The first analog-to-digital conversion unit 111 performs analog-to-digital conversion on fourth uplink analog radio frequency signals transmitted by the plurality of first optoelectronic units 103 to obtain a fourth uplink digital signal. In other words, the first uplink digital signal may include the third uplink digital signal and the fourth uplink digital signal.

In this embodiment of this application, the first analog-to-digital conversion unit 111 or the selection unit 104 can combine energy of the third uplink analog radio frequency signals transmitted by the plurality of first optoelectronic units 103. Then, the first analog-to-digital conversion unit 111 may perform analog-to-digital conversion on the combined signal to obtain the third uplink digital signal. Similarly, the first analog-to-digital conversion unit 111 or the selection unit 104 can combine energy of the fourth uplink analog radio frequency signals transmitted by the plurality of first optoelectronic units 103. Then, the first analog-to-digital conversion unit 111 may perform analog-to-digital conversion on the combined signal to obtain the fourth uplink digital signal.

In a possible example, as described above, a cell group corresponding to the first analog-to-digital conversion unit 111 may include a plurality of cells in different frequency bands. Correspondingly, the third uplink analog radio frequency signal and the fourth uplink analog radio frequency signal may be signals of cells in different frequency bands.

In another possible implementation, the third uplink analog radio frequency signal and the fourth uplink analog radio frequency signal may be signals of a same cell. In this implementation, one second device 20 connected to each first optoelectronic unit 103 may be a MIMO device. The MIMO device includes a plurality of signal receive (receive, RX) channels, each signal receive channel may be configured to receive one uplink analog radio frequency signal, and frequency bands of the uplink analog radio frequency signals received through the plurality of signal receive channels may be the same. Each signal receive channel may include a signal processing unit (for example, an amplifier and a filter) and an antenna.

If one second device 20 connected to a first optoelectronic unit 103 includes two signal receive channels in a same frequency band, the second device 20 needs to transmit two uplink analog radio frequency signals in a same frequency band to the first optoelectronic unit 103 connected to the second device 20. If the second device 20 directly transmits two uplink analog radio frequency signals in a same frequency band through an optical carrier, two fiber cores in an optical fiber need to be occupied. When the second device 20 includes a large quantity of signal receive channels, a high requirement is imposed on a quantity of fiber cores in the optical fiber. However, in this embodiment of this application, the second device 20 may perform frequency shifting on one of the uplink analog radio frequency signals, to obtain two uplink analog radio frequency signals in different frequency bands. Therefore, the two uplink analog radio frequency signals in the different frequency bands may be transmitted to the first optoelectronic unit 103 through one fiber core in a frequency division multiplexing manner.

As described above, each first optoelectronic unit 103 may be connected to one second device 20 through a multi-core optical fiber. Therefore, each second device 20 may transmit a plurality of uplink analog radio frequency signals in parallel through a plurality of fiber cores. Each fiber core may be configured to transmit a plurality of uplink analog radio frequency signals in different frequency bands, and different fiber cores may transmit uplink analog radio frequency signals in different frequency bands, or may transmit uplink analog radio frequency signals in a same frequency band.

Assuming that each first optoelectronic unit 103 is connected to one second device 20 through an M-core optical fiber, and each second device 20 includes N signal receive channels, a first uplink optical signal transmitted by each second device 20 may include M uplink optical signals transmitted through M fiber cores. One uplink optical signal transmitted through each fiber core carries N/M uplink analog radio frequency signals whose frequency bands are different from each other. Correspondingly, after performing optical-to-electrical conversion on the M uplink optical signals, the first optoelectronic unit 103 may obtain M groups of analog radio frequency signals, where each group of analog radio frequency signals includes the N/M uplink analog radio frequency signals whose frequency bands are different from each other. Then, the first analog-to-digital conversion unit 111 may perform analog-to-digital conversion on each group of analog radio frequency signals, in other words, the first analog-to-digital conversion unit 111 may perform analog-to-digital conversion on the N uplink analog radio frequency signals to obtain N uplink digital signals.

It may be understood that, if the first device 10 further includes the second analog-to-digital conversion unit 112, the second uplink analog radio frequency signal transmitted by the selection unit 104 to the second analog-to-digital conversion unit 112 may also include two analog radio frequency signals in different frequency bands. Correspondingly, the second analog-to-digital conversion unit 112 performs analog-to-digital conversion on the second uplink analog radio frequency signal, where the obtained second uplink digital signal may include a fifth uplink digital signal and a sixth uplink digital signal. For a working principle of the second analog-to-digital conversion unit 112, refer to the foregoing related descriptions about the first analog-to-digital conversion unit 111. Details are not described herein again.

In this embodiment of this application, each of the first analog-to-digital conversion unit 111 and the second analog-to-digital conversion unit 112 may include an analog-to-digital converter (analog-to-digital converter, ADC). If both the first analog-to-digital conversion unit 111 and the second analog-to-digital conversion unit 112 are configured to process a plurality of uplink analog radio frequency signals in different frequency bands, each analog-to-digital conversion unit may include a plurality of ADCs, or may include one multi-channel ADC. Each ADC or each ADC channel may be configured to process an uplink analog radio frequency signal in one frequency band.

Optionally, as shown in FIG. 6, the first device 10 may further include a splitter unit 113 connected to the first analog-to-digital conversion unit 111 and a splitter unit 113 connected to the second analog-to-digital conversion unit 112. Each splitter unit 113 can split a plurality of uplink analog radio frequency signals, in different frequency bands, transmitted by the selection unit 104, and transmit the uplink analog radio frequency signals, in the different frequency bands, obtained through the splitting, to an analog-to-digital conversion unit connected to the splitter unit 113.

For example, it is assumed that the selection unit 104 transmits M groups of analog radio frequency signals, and each group of analog radio frequency signals includes N/M uplink analog radio frequency signals whose frequency bands are different from each other. In this case, the splitter unit 113 may split each group of analog radio frequency signals and then transmit, to the first analog-to-digital conversion unit 111, the analog radio frequency signals obtained through the splitting.

It may be understood that, if a quantity of analog-to-digital conversion units included in the first device 10 is greater than 2, a quantity of splitter units 113 included in the first device 10 may also be greater than 3. In other words, the first device 10 may include a plurality of splitter units 113 that are connected to a plurality of analog-to-digital conversion units in one-to-one correspondence.

Optionally, signals obtained through the optical-to-electrical conversion performed by one of the plurality of first optoelectronic units 103 on the first uplink optical signal transmitted by one connected second device 20 may further include an uplink analog signal. A frequency band of the uplink analog signal is different from a frequency band of the first uplink analog radio frequency signal transmitted by the first optoelectronic unit 103. It may be understood that if the first uplink analog radio frequency signal includes a plurality of uplink analog radio frequency signals in different frequency bands, a frequency band of the uplink analog signal is different from a frequency band of any uplink analog radio frequency signal.

As shown in FIG. 6, the first device 10 may further include a splitter unit 114 and a signal transmission unit 109. The splitter unit 114 is configured to split analog signals transmitted by one first optoelectronic unit 103 connected to the splitter unit 114, to obtain the first uplink analog radio frequency signal and the uplink analog signal, and is configured to: transmit the first uplink analog radio frequency signal to the first analog-to-digital conversion unit 111, and transmit the uplink analog signal to the signal transmission unit 109.

The uplink analog signal may include at least one of the following signals: a signal that is reported by a second device 20 connected to the first optoelectronic unit 103 and that indicates a working status of the second device 20; and a network signal that is reported by the second device 20 connected to the first optoelectronic unit 103 and that is from an IP device. If the uplink analog signal includes the signal indicating the working status and the network signal, a frequency band of the signal indicating the working status is different from a frequency band of the network signal.

As shown in FIG. 6, the signal transmission unit 109 may include a control unit 1092 and a gateway interface unit 1091. The splitter unit 114 may transmit the signal indicating the working status of the second device 20 to the control unit 1092, and may transmit the network signal from the IP device to the gateway interface unit 1091. The working status of the second device 20 may include a transmit power, an ambient temperature, and ambient humidity of the second device 20, and a status of each unit in the second device 20. The control unit 1092 may generate, based on the working status reported by the second device 20, a control signal used to adjust the working status of the second device 20. For example, the control unit 1092 may generate a control signal based on the ambient temperature of the second device 20, to adjust a gain obtained when the second device 20 processes the analog radio frequency signal.

After receiving the analog network signal transmitted by the splitter unit 114, the gateway interface unit 1091 may convert the analog network signal into a digital network signal, and transmit the digital network signal to an IP gateway. In this way, the IP gateway and the IP device can communicate with each other through the wireless access system. The IP device may be a Bluetooth device or a WLAN device, for example, may be a router, a wireless access point (access point, AP), a camera, or a smoke alarm.

In this embodiment of this application, any second device 20 in the wireless access system may be further cascaded to a third device (namely, a next-level remote device). Correspondingly, the uplink analog signal may further include a signal that is reported by the third device through the second device 20 and that indicates a working status of the third device, and the control unit 1092 can further generate, based on the working status reported by the third device, a control signal used to adjust the working status of the third device.

The splitter unit 114 splits the first uplink analog radio frequency signal and the uplink analog signal in the different frequency bands, so that the second device 20 can transmit the uplink analog radio frequency signal through the optical carrier, and can further transmit, through the optical carrier, at least one of the signal indicating the working status of the second device 20 and the network signal. This can help the first device 10 perform centralized control on each second device 20 connected to the first device 10 (and the third device cascaded to the second device 20). In addition, the first device can be flexibly networked with another type of network (for example, a Bluetooth network or a WLAN) to implement multi-network convergence.

As shown in FIG. 6, a quantity of splitter units 114 included in the first device 10 may be equal to a quantity of optoelectronic units in the first device 10, and in the first device 10, the plurality of splitter units 114 are connected to the plurality of optoelectronic units in one-to-one correspondence. Therefore, each optoelectronic unit can receive an uplink analog signal transmitted by one second device 20 connected to the optoelectronic unit.

Optionally, the BBU 00 may be further configured to transmit a power consumption adjustment instruction to the first device 10. The digital processing unit 101 in the first device 10 is further configured to adjust a working status of at least one unit of the first analog-to-digital conversion unit 111 and the plurality of first optoelectronic units 103 according to the power consumption adjustment instruction.

If the first device 10 further includes the second analog-to-digital conversion unit 112 and the plurality of second optoelectronic units 106, the digital processing unit 101 may further adjust, according to the power consumption adjustment instruction transmitted by the BBU 00, a working status of at least one unit of the second analog-to-digital conversion unit 112 and the plurality of second optoelectronic units 106.

For a specific process in which the digital processing unit 101 adjusts a working status of each unit in the first device 10 according to the power consumption adjustment instruction, refer to the related descriptions in the foregoing embodiment. Details are not described herein again. Because the analog-to-digital conversion unit, the digital-to-analog conversion unit, the optoelectronic unit, and the radio frequency processing unit are all analog components, and response time for switching a working status of the analog component is short, fast dynamic switching of the working status of each unit can be implemented without affecting signal transmission performance.

Optionally, the digital processing unit 101 may further adjust a working status of the digital processing unit 101 according to the power consumption adjustment instruction. For example, the digital processing unit 101 may disable a part of functions to reduce power consumption.

In this embodiment of this application, the combiner unit may be a frequency band combiner, which can combine signals in different frequency bands into one signal; and the splitter unit may be a frequency band splitter, which can split signals in different frequency bands.

A person skilled in the art can clearly understand that, a process in which the first device processes the uplink optical signal to obtain the uplink baseband signal is an inverse process corresponding to a process in which the first device processes the downlink baseband signal to obtain the downlink optical signal. Therefore, for ease and brevity of description, for a specific working process of processing the uplink optical signal by the first device described above, refer to a corresponding process of processing the downlink baseband signal in the foregoing embodiment. Details are not described herein again.

It may be understood that the first device provided in this embodiment of this application may be an independent device, or may include a plurality of apparatuses that are independent of each other.

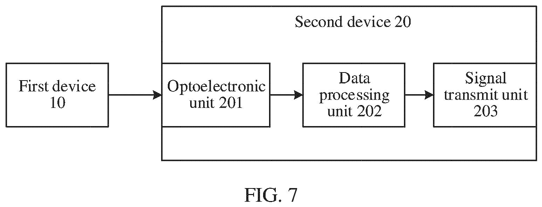

An embodiment of this application further provides a second device. The second device 20 may be used in the wireless access system shown in FIG. 1. As shown in FIG. 7, the second device 20 includes an optoelectronic unit 201, a data processing unit 202, and a signal transmit unit 203.

The optoelectronic unit 201 is configured to: be connected to the first device 10, and perform optical-to-electrical conversion on a downlink optical signal transmitted by the first device 10, to obtain a first downlink analog radio frequency signal in a first frequency band and a second downlink analog radio frequency signal in a second frequency band. The optoelectronic unit 201 may also be referred to as an optical module, and may be an SFP optical module, for example, may be a DSFP optical module.

The data processing unit 202 is configured to shift the second downlink analog radio frequency signal to the first frequency band, to obtain a third downlink analog radio frequency signal in the first frequency band.

The signal transmit unit 203 has a first antenna and a second antenna, and the signal transmit unit 203 is configured to: transmit the first downlink analog radio frequency signal through the first antenna, and transmit the third downlink analog radio frequency signal through the second antenna.

In this embodiment of this application, after performing frequency shifting on the second downlink analog radio frequency signal, the data processing unit 202 can obtain two downlink analog radio frequency signals in the first frequency band. Then, the signal transmit unit 203 may simultaneously transmit the two downlink analog radio frequency signals in the first frequency band through the two antennas. In other words, the second device 20 provided in this embodiment of this application is a MIMO device. The signal transmit unit 203 of the MIMO device has at least two signal transmit channels in a same frequency band, and each signal transmit channel may be configured to transmit one downlink analog radio frequency signal. Each signal transmit channel may include a signal processing unit (for example, an amplifier and a filter) and an antenna. Correspondingly, before transmitting the downlink analog radio frequency signal through the antenna, each signal transmit channel may further perform processing such as amplification and filtering on the downlink analog radio frequency signal.

It may be understood that, in a scenario in which the second device 20 has at least two signal transmit channels in a same frequency band, the first device 20 needs to transmit at least two downlink analog radio frequency signals in a same frequency band to the second device 20, and the at least two downlink analog radio frequency signals in the same frequency band need to be transmitted through different fiber cores in an optical fiber. Because a quantity of fiber cores in the optical fiber is limited, a quantity of signal transmit channels in the second device 20 is limited, and performance of the wireless access system is affected.

However, in this embodiment of this application, after receiving a plurality of downlink analog radio frequency signals in different frequency bands, the data processing unit 202 in the second device 20 can obtain a plurality of downlink analog radio frequency signals in a same frequency band through frequency shifting operations. Therefore, the first device 10 may transmit the downlink analog radio frequency signals in the different frequency bands through one fiber core in a frequency division multiplexing manner. In this way, it can be ensured that a plurality of signal transmit channels can be configured for the second device 20 without increasing a quantity of fiber cores in the optical fiber, to ensure signal transmit performance of the second device 20.

Optionally, assuming that the second device 20 is connected to the first device 10 through an M-core optical fiber, and the second device 20 has N signal transmit channels in a same frequency band, the downlink optical signal received by the optoelectronic unit 201 in the second device 20 may include M downlink optical signals transmitted through M fiber cores in the optical fiber. One downlink optical signal transmitted through each fiber core carries N/M downlink analog radio frequency signals in different frequency bands.

After receiving the M downlink optical signals, the optoelectronic unit 201 may perform optical-to-electrical conversion on each downlink optical signal, to obtain M groups of analog radio frequency signals. Each group of analog radio frequency signals includes the N/M downlink analog radio frequency signals whose frequency bands are different from each other. For each group of analog radio frequency signals, the second device 20 may perform frequency shifting on one or more downlink analog radio frequency signals, to shift a frequency band of each group of analog radio frequency signals to a same frequency band, to obtain N downlink analog radio frequency signals in a same frequency band. Then, the second device 20 may transmit the N downlink analog radio frequency signals in the same frequency band through the N signal transmit channels.

It may be understood that, if the frequency bands of the N signal transmit the second device 20 are not completely the same, after performing frequency shifting on one or more downlink analog radio frequency signals in each group of analog radio frequency signals, the second device 20 may obtain N/M downlink analog radio frequency signals whose frequency bands are not completely the same. For example, assuming that M=2, and the second device 20 has N=8 signal transmit channels, where frequency bands of four signal transmit channels are 3 GHz, and frequency bands of the other four signal transmit channels are 5 GHz, the second device 20 may receive two groups of analog radio frequency signals, and each group of analog radio frequency signals includes four downlink analog radio frequency signals whose frequency bands are different from each other. After performing frequency shifting on at least one downlink analog radio frequency signal in each group of analog radio frequency signals, the second device 20 may obtain two downlink analog radio frequency signals whose frequency bands are 3 GHz and two downlink analog radio frequency signals whose frequency bands are 5 GHz.

In this embodiment of this application, in addition to performing frequency shifting on the downlink analog radio frequency signal, the data processing unit 202 may be further configured to perform scaling processing on the downlink analog radio frequency signal based on a preset gain. For example, the data processing unit 202 may perform scaling processing on the downlink analog radio frequency signal by using a digital variable attenuator. In addition, the data processing unit 202 can further perform delay compensation based on a clock signal transmitted by the first device 10, to implement clock synchronization with the first device 10. The data processing unit 202 may be an IC, for example, may be an FPGA.

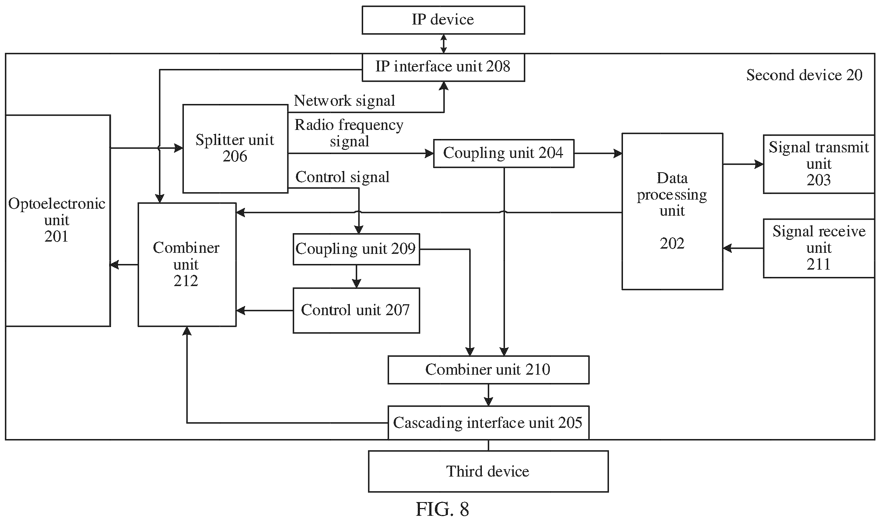

Optionally, as shown in FIG. 8, the second device 20 may further include a coupling unit 204 and a cascading interface unit 205.

The coupling unit 204 is configured to: separately transmit the first downlink analog radio frequency signal to the data processing unit 202 and the cascading interface unit 205, and separately transmit the second downlink analog radio frequency signal to the data processing unit 202 and the cascading interface unit 205.

In this embodiment of this application, the coupling unit 204 may split (for example, equally split) the first downlink analog radio frequency signal into two signals based on a power, and separately transmit the two first downlink analog radio frequency signals obtained through the power splitting to the data processing unit 202 and the cascading interface unit 205. Similarly, the coupling unit 204 may split (for example, equally split) the second downlink analog radio frequency signal into two signals based on a power, and separately transmit the two second downlink analog radio frequency signals obtained through the power splitting to the data processing unit 202 and the cascading interface unit 205. The coupling unit 204 may be a power divider.

The cascading interface unit 205 is configured to: be connected to a third device, and transmit the first downlink analog radio frequency signal and the second downlink analog radio frequency signal to the third device.

The third device and the second device 20 may be devices of a same type. For example, the third device is also a pRRU. In other words, in this embodiment of this application, the second device 20 may be cascaded to a next-level remote device. After receiving the first downlink analog radio frequency signal and the second downlink analog radio frequency signal, the third device may shift the frequency band of the second downlink analog radio frequency signal to the first frequency band, and separately transmit, through two antennas included in the third device, the first downlink analog radio frequency signal and the second downlink analog radio frequency signal that is obtained through the frequency shifting. In other words, the third device can perform a same signal processing operation as the second device 20.

Optionally, the cascading interface unit 205 may alternatively be an optoelectronic unit. Correspondingly, the cascading interface unit 204 may be connected to the third device through an optical fiber. Alternatively, the cascading interface unit 205 may be a cable interface, and correspondingly, the cascading interface unit 204 may be connected to the third device through a radio frequency cable (also referred to as a coaxial cable).

Because the second device 20 may be connected to the third device through the cascading interface unit 205, a quantity of remote devices that can be connected to the first device 10 can be effectively increased without increasing a quantity of optoelectronic units in the first device 10. Therefore, a coverage area of the wireless access system can be effectively improved, and resource utilization of the first device 10 can be effectively improved. In addition, in a scenario in which the second device 20 is connected to the third device through a cable, because costs of the cable are lower than those of an optical fiber, costs of the wireless access system can be further effectively reduced.

Optionally, signals obtained by the optoelectronic unit 201 by performing optical-to-electrical conversion on the downlink optical signal may further include a fourth downlink analog radio frequency signal in a third frequency band.

The coupling unit 204 may be further configured to separately transmit the fourth downlink analog radio frequency signal to the data processing unit 202 and the cascading interface unit 205. The cascading interface unit 205 is further configured to transmit the fourth downlink analog radio frequency signal to the third device.

Neither the signal processed by the data processing unit 202 nor the signal transmitted by the signal transmit unit 203 includes the fourth downlink analog radio frequency signal in the third frequency band. A signal processed or transmitted by the third device may include the fourth downlink analog radio frequency signal in the third frequency band, and does not include the first downlink analog radio frequency signal in the first frequency band and the second downlink analog radio frequency signal of the second frequency band.

In this embodiment of this application, the downlink optical signal transmitted by the first device 10 to the second device 20 may carry downlink analog radio frequency signals in the first frequency band, the second frequency band, and the third frequency band. The second device 20 may shift the downlink analog radio frequency signal in the second frequency band to the first frequency band, transmit the downlink analog radio frequency signal in the first frequency band, and do not process the downlink analog radio frequency signal in the third frequency band. The third device may be configured to: transmit the downlink analog radio frequency signal in the third frequency band, or shift the downlink analog signal in the third frequency band to a fourth frequency band and then transmit the downlink analog radio frequency signal, and the third device does not process the downlink analog radio frequency signals in the first frequency band and the second frequency band.

It can be learned from the foregoing analysis that the second device 20 and the third device cascaded to the second device 20 may be configured to transmit downlink analog radio frequency signals in different frequency bands, in other words, the second device 20 and the third device may support different frequency bands. Therefore, expansion of a frequency band supported by the wireless access system can be implemented in a device cascading manner, to effectively improve flexibility of the frequency band expansion. For example, a third device that supports a millimeter wave (millimeter wave, mmW) frequency band may be cascaded to the second device 20, to extend a frequency band of the wireless access system to the mmW frequency band.

In a scenario in which the second device 20 and the third device support different frequency bands, a distance between the second device 20 and the third device may be short (for example, less than 1 meter). Therefore, the second device 20 may be cascaded to the third device through a radio frequency jumper.

Optionally, still refer to FIG. 8. The second device 20 may further include a splitter unit 206, a control unit 207, and an IP interface unit 208. The splitter unit 206 is separately connected to the optoelectronic unit 201, the control unit 207, and the IP interface unit 208. Signals obtained through the optical-to-electrical conversion performed by the optoelectronic unit 201 on the downlink optical signal may further include a downlink analog signal, and a frequency band of the downlink analog signal is different from the first frequency band and is different from the second frequency band.

The splitter unit 206 is configured to: split, based on the frequency bands, the analog signals output by the optoelectronic unit 201, transmit, to the data processing unit 202, both the first downlink analog radio frequency signal and the second downlink analog radio frequency signal that are obtained through the splitting; and transmit, to at least one unit of the control unit 207 and the IP interface unit 208, the downlink analog signal obtained through the splitting.

If the downlink analog signal includes a network signal from an IP gateway, the splitter unit 206 may transmit the network signal to the IP interface unit 208. As shown in FIG. 8, the IP interface unit 208 is connected to an IP device, and the IP interface unit 208 is configured to transmit the network signal to the IP device. For example, the IP interface unit 208 may convert an analog network signal into a digital network signal, and then transmit the digital network signal to the IP device. Optionally, the IP device may be a Bluetooth device or a WLAN device, for example, may be a router, an AP, a camera, or a smoke alarm.

If the downlink analog signal includes a control signal used to control a working status of the second device 20, the splitter unit 206 may transmit the control signal to the control unit 207. The control unit 207 may adjust the working status of the second device 20 based on the control signal. For example, the control unit 206 may adjust a gain of the data processing unit 202, may control an enabling status of each signal transmit channel in the second device 20; or may control the second device 20 to be on, be off, or hibernate. The control unit 207 and the data processing unit 202 may be integrated, or may be independently disposed. For example, the control unit 207 may be an independent chip.

It may be understood that, when the first device 10 adjusts the working status of the second device 20 by using the control signal, the optoelectronic unit 201, the coupling unit 204, and the cascading interface unit 205 in the second device 20 can still work normally. In other words, an operation of adjusting the working status of the second device 20 does not affect the third device, that is, the first device 10 can still supply power to the third device and transmit a signal through the second device 20.

In a scenario in which the second device 20 is connected to the third device through the cascading interface unit 205, as shown in FIG. 8, the second device 20 may further include a coupling unit 209 and a combiner unit 210.

The coupling unit 209 is separately connected to the splitter unit 206, the control unit 207, and the combiner unit 210. The coupling unit 209 is configured to: split, based on a power, the control signal transmitted by the splitter unit 206 to two signals, and transmit the two control signals obtained through the power splitting to the control unit 207 and the combiner unit 210 respectively.

The combiner unit 210 is further connected to the cascading interface unit 205. The combiner unit 210 is configured to: combine the downlink analog radio frequency signal transmitted by the coupling unit 204 and the control signal transmitted by the coupling unit 209, and transmit the combined signal to the cascading interface unit 205. The cascading interface unit 205 may further transmit the combined signal to the third device. In this way, cascaded transmission of downlink analog radio frequency is implemented, and cascaded transmission of the control signal is further implemented, so that the first device 10 can control the working status of the second device 20, and further control a working status of the third device.

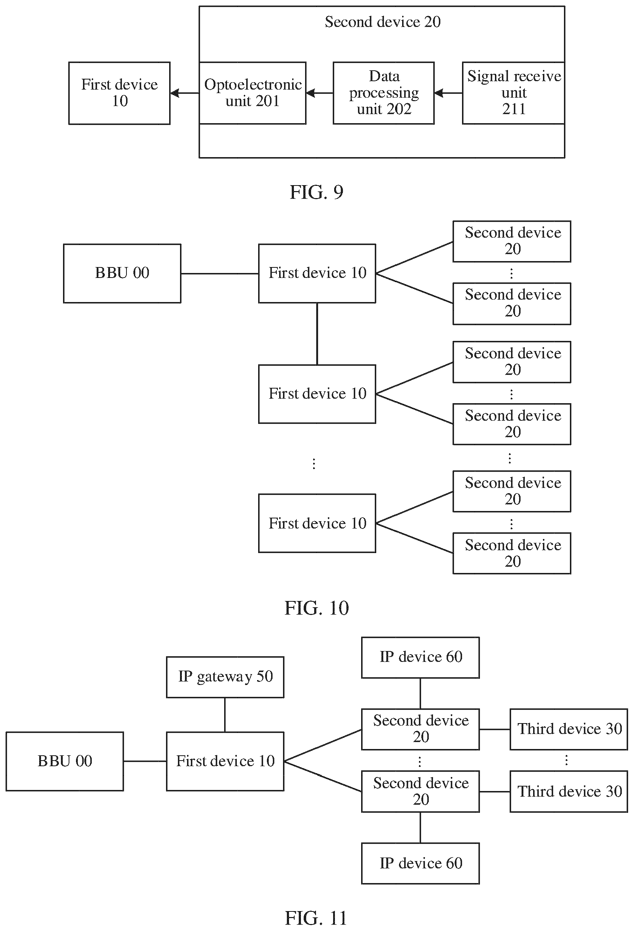

An embodiment of this application provides another second device. The second device 20 may be used in the wireless access system shown in FIG. 1. As shown in FIG. 9, the second device 20 includes a signal receive unit 211, a data processing unit 202, and an optoelectronic unit 201.

The signal receive unit 211 has a first antenna and a second antenna, and the signal receive unit 211 is configured to: receive a first uplink analog radio frequency signal in a first frequency band through the first antenna, and receive a second uplink analog radio frequency signal in the first frequency band through the second antenna;
The data processing unit 202 is configured to shift the second uplink analog radio frequency signal to a second frequency band, to obtain a third uplink analog radio frequency signal in the second frequency band.

The optoelectronic unit 201 is configured to: be connected to a first device 10, and perform electrical-to-optical conversion on the first uplink analog radio frequency signal and the third uplink analog radio frequency signal to obtain an uplink optical signal, and transmit the uplink optical signal to the first device 10.

In this embodiment of this application, after performing frequency shifting on the second uplink analog radio frequency signal, the data processing unit 202 can obtain two uplink analog radio frequency signals in different frequency bands. Then, the optoelectronic unit 201 may transmit the two uplink analog radio frequency signals in the different frequency bands through one fiber core in a frequency division multiplexing manner. In this way, it can be ensured that the second device 20 can configure a plurality of signal receive channels without increasing a quantity of fiber cores in the optical fiber, to ensure signal receive performance of the second device 20.

Optionally, as shown in FIG. 8, the second device 20 may further include a cascading interface unit 205 and a combiner unit 212.

The cascading interface unit 205 is configured to: be connected to a third device, and receive a fourth uplink analog radio frequency signal transmitted by the third device.

The combiner unit 212 is configured to: combine the first uplink analog radio frequency signal, the third uplink analog radio frequency signal, and the fourth uplink analog radio frequency signal, and transmit the combined signal to the optoelectronic unit 201.

Correspondingly, a process in which the optoelectronic unit 201 performs electrical-to-optical conversion on the first uplink analog radio frequency signal and the third uplink analog radio frequency signal to obtain the uplink optical signal may specifically include: The optoelectronic unit 201 performs electrical-to-optical conversion on the combined analog radio frequency signals transmitted by the combiner unit 212, to obtain the uplink optical signal.

A frequency band of the fourth radio frequency signal is different from the first frequency band, and is different from the second frequency band. In other words, the second device 20 and the third device cascaded to the second device 20 may support different frequency bands. In this way, the third device is cascaded, so that a frequency band supported by the wireless access system can be flexibly expanded.

Alternatively, the frequency band of the fourth radio frequency signal includes at least one of the first frequency band and the second frequency band. In other words, the second device 20 and the third device cascaded to the second device 20 may support a same frequency band. Therefore, the third device is cascaded, so that a coverage area of the wireless access system can be effectively increased.

It may be understood that, an antenna included in a signal transmit channel and an antenna included in the signal receive channel in the second device 20 may be different antennas or may be a same antenna. In other words, the second device 20 may separately transmit a signal and receive a signal through different antennas, or may receive and transmit a signal through a same group of antennas.

A person skilled in the art can clearly understand that, a process in which the second device processes the uplink analog radio frequency signal to obtain the uplink optical signal is an inverse process corresponding to a process in which the second device processes the downlink optical signal to obtain the downlink analog radio frequency signal. Therefore, for ease and brevity of description, for a specific working process of processing the uplink analog radio frequency signal by the second device described above, refer to a corresponding process of processing the downlink optical signal in the foregoing embodiment. Details are not described herein again.

In conclusion, an embodiment of this application provides a second device. The second device can perform frequency shifting on an analog radio frequency signal. Therefore, analog radio frequency signals in different frequency bands can be transmitted between a first device and the second device through a fiber core in a frequency division multiplexing manner. In this way, it can be ensured that a plurality of signal transmit channels can be configured for the second device without increasing a quantity of fiber cores in the optical fiber, to ensure signal transmit performance of the second device.

It may be understood that the second device provided in this embodiment of this application may be an independent device, or may include a plurality of apparatuses that are independent of each other.

The following describes working principles of the first device 10 and the second device 20 by using an example in which each second device 20 has four signal transmit channels whose frequency bands are 3.5 GHz and each second device 20 is connected to the first device 10 through a 2-core optical fiber.

First, the digital processing unit 101 can process a first downlink baseband signal transmitted by the BBU 00 into a first downlink digital signal, and transmit the first downlink digital signal to the first digital-to-analog conversion unit 111. The first downlink digital signal includes four downlink digital signals, and the first digital-to-analog conversion unit 111 may perform digital-to-analog conversion on the four downlink digital signals through a 4-channel DAC included in the first digital-to-analog conversion unit 111 to obtain four downlink analog radio frequency signals, in other words, the first downlink analog radio frequency signal includes the four downlink analog radio frequency signals in different frequency bands. The four downlink analog radio frequency signals may be divided into two groups of analog radio frequency signals, and each group of analog radio frequency signals includes two downlink analog radio frequency signals in different frequency bands. For example, the frequency bands of the two downlink analog radio frequency signals may be 3.5 GHz and 3.7 GHz respectively.

Then, the combiner unit 107 may perform frequency band combination on each group of analog radio frequency signals, to obtain two combined signals, where each combined signal includes signals in two frequency bands: 3.5 GHz and 3.7 GHz. The selection unit 104 may further split each combined signal based on powers, and transmit the split signals to the plurality of first optoelectronic units 103. In this way, each first optoelectronic unit 103 may receive two combined signals. Further, each first optoelectronic unit 103 can perform optical-to-electrical conversion on each combined signal, to obtain two downlink optical signals, in other words, a first downlink optical signal includes the two downlink optical signals. The two downlink optical signals may be transmitted in parallel to one second device 20 through two fiber cores in the optical fiber, where one downlink optical signal is transmitted through each fiber core, and each downlink optical signal carries the downlink analog radio frequency signals in the two frequency bands: 3.5 GHz and 3.7 GHz.

After receiving the two downlink optical signals through the two fiber cores, the second device 20 may perform optical-to-electrical conversion on each downlink optical signal, to obtain two groups of analog radio frequency signals. Each group of analog radio frequency signals includes the downlink analog radio frequency signals in the two frequency bands: 3.5 GHz and 3.7 GHz. Then, for each group of analog radio frequency signals, the second device 20 may shift the frequency band of the 3.7 GHz downlink analog radio frequency signal to 3.5 GHz, to obtain four downlink analog radio frequency signals whose frequency bands are 3.5 GHz. The second device 20 may further transmit the four downlink analog radio frequency signals whose frequency bands are 3.5 GHz through four signal transmit channels whose frequency bands are 3.5 GHz.

An embodiment of this application further provides a wireless access system. As shown in FIG. 1, the system includes a BBU 00, a first device 10, and a plurality of second devices 20.

In a possible example, the first device 10 may be a device that is provided in the foregoing embodiment and that is configured to convert a downlink analog radio frequency signal into a downlink optical signal for transmission, and each second device 20 may be a device that is provided in the foregoing embodiment and that is configured to convert a downlink optical signal into a downlink analog radio frequency signal for transmitting. For example, the first device 10 may be the device shown in FIG. 2 to FIG. 4, and the second device 20 may be the device shown in FIG. 7 or FIG. 8.

In another possible example, the first device 10 may be a device that is provided in the foregoing embodiment and that is configured to: convert an uplink optical signal into an uplink analog radio frequency signal, and convert the uplink analog radio frequency signal into an uplink baseband signal; and each second device 20 may be a device that is provided in the foregoing embodiment and that is configured to: convert an uplink analog radio frequency signal into an uplink optical signal and then transmit the uplink optical signal to the first device 10. For example, the first device 10 may be the device shown in FIG. 5 or FIG. 6, and the second device 20 may be the device shown in FIG. 8 or FIG. 9.

Optionally, as shown in FIG. 10, the wireless access system may include a plurality of cascaded first devices 10, and each first device 10 can be connected to a plurality of second devices 20. Each first device 10 may be cascaded to another first device 10 through a CPRI or an eCPRI.

Optionally, as shown in FIG. 11, the system may further include a third device 30. The third device 30 is cascaded to one of the plurality of second devices 20 through an optical fiber or a cable. A device type of the third device 30 is the same as a device type of the second device 20, that is, the third device 30 is also a remote device. For example, the third device 30 may be a pRRU.

It may be understood that, as shown in FIG. 11, the system may include a plurality of third devices 30, and each second device 20 may be cascaded to one third device 30. In addition, at least one third device 30 in the system may be further cascaded to a next-level remote device. In other words, each second device 20 can be sequentially cascaded to a plurality of remote devices, so that a quantity of remote devices connected to each first device 10 can be effectively increased, and a coverage area of the wireless access system can be increased.

Optionally, in this embodiment of this application, each of the plurality of second devices 20 may be configured to: receive and transmit an analog radio frequency signal within a first frequency band, and the third device 30 may be configured to: receive and transmit an analog radio frequency signal within a second frequency band. The first frequency band range and the second frequency band range do not overlap.

For example, the first frequency band range may include the first frequency band and the second frequency band described above, and the second frequency band range may include the third frequency band and the fourth frequency band described above. Because each second device 20 and the third device 30 cascaded to the second device 20 can process analog radio frequency signals in different frequency band ranges, flexible expansion of a frequency band supported by the wireless access system can be implemented through device cascading.

Optionally, still refer to FIG. 11. The system may further include an IP gateway 50 and at least one IP device 60. The IP gateway 50 is connected to the first device 10, and each IP device 60 is connected to one second device 20.

It is assumed that in the wireless access system, one second device 20 in every K second devices 20 is connected to one IP device 60, so that 1:K networking between the IP device and remote devices can be implemented, where K is an integer greater than 1. The IP gateway 50 and the IP device 60 may exchange a network signal through the first device 10 and the second device 20. Therefore, flexible networking between the wireless access system and another type of network (for example, a Bluetooth network or a WLAN) is implemented, and multi-network convergence is implemented.

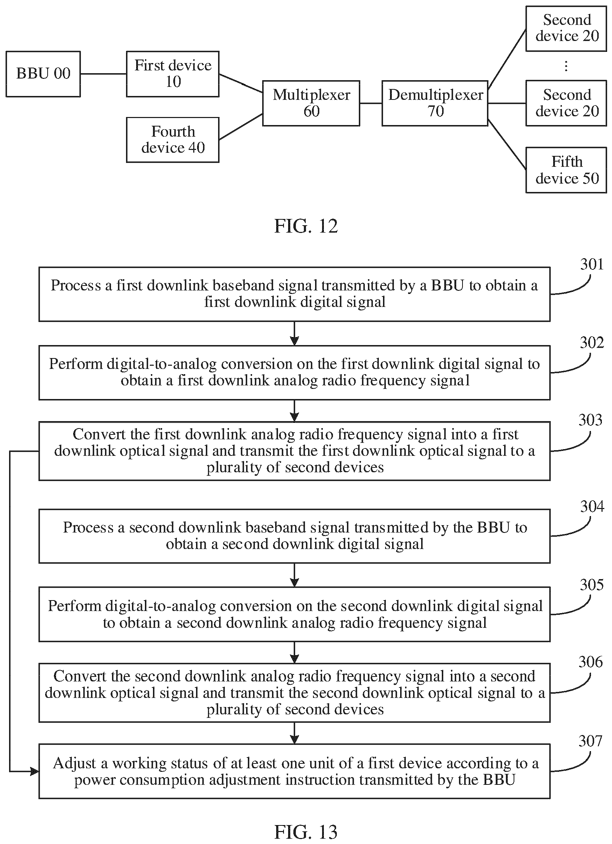

FIG. 12 is a schematic diagram of a structure of still another wireless access system according to an embodiment of this application. As shown in FIG. 12, the system may further include a fourth device 40, a fifth device 50, a multiplexer 60, and a demultiplexer 70.

The fourth device 40 is configured to transmit a first optical signal to the multiplexer 60.

The multiplexer 60 is connected to the demultiplexer 70 through one optical fiber, and is configured to: multiplex the first optical signal and a plurality of second optical signals transmitted by a first device 10 and transmit the multiplexed signal to the demultiplexer 70. A wavelength of the first optical signal is different from wavelengths of the plurality of second optical signals.

The demultiplexer 70 is configured to: demultiplex the multiplexed signal transmitted by the multiplexer 60, transmit the first optical signal obtained through the demultiplexing to the fifth device 50, and transmit, in one-to-one correspondence, the plurality of second optical signals obtained through the demultiplexing to the plurality of second devices 20.

The first optical signal may be obtained by the fourth device 40 by performing electrical-to-optical conversion on at least one of the following signals: a network signal and a digital baseband signal.

In this embodiment of this application, the fourth device 40 may include an IP gateway, and the fifth device 50 may include an IP device. The IP gateway can convert a network signal (for example, a Bluetooth signal or a WLAN signal) into a first optical signal, and transmit the first optical signal to the IP device through the multiplexer 60 and the demultiplexer 70.

Alternatively, the fourth device 40 may include a convergence device, and the fifth device 50 may include a remote device. The convergence device can convert a digital baseband signal into a first optical signal, and then transmit the first optical signal to a remote device through the multiplexer 60 and the demultiplexer 70. After receiving the first optical signal, the remote device may perform optical-to-electrical conversion on the first optical signal, to obtain the digital baseband signal. Then, the remote device may process the digital baseband signal into a radio frequency signal and transmit the radio frequency signal.

It can be learned from the foregoing analysis that the wireless access system provided in this embodiment of this application may further transmit an analog radio frequency signal and a digital signal (for example, at least one of a network signal and a digital baseband signal) to different devices through one optical fiber in a wavelength division multiplexing manner. In this way, hybrid networking of different types of networks is implemented, and a quantity and lengths of optical fibers that need to be laid in a hybrid networking scenario are effectively reduced, to effectively simplify a network structure of a hybrid network and reduce deployment costs of the hybrid network.

It can be learned from the foregoing analysis that the wireless access system provided in this embodiment of this application can implement a high effective radio frequency signal transmission bandwidth, support a large quantity of frequency bands, have a large quantity of signal receive and transmit channels, and satisfy requirements of a 5th generation mobile communication technology (5th generation mobile communication technology, 5 GHz for short) and even a next generation mobile communication technology. In addition, the wireless access system can further be flexibly networked with another type of network, to satisfy a requirement of a to-business (to-business, 2B) client.

An embodiment of this application provides a signal transmission method, which may be applied to the first device shown in FIG. 2 to FIG. 4 provided in the foregoing embodiments. As shown in FIG. 13, the method includes the following steps.

Step 301: Process a first downlink baseband signal transmitted by a BBU to obtain a first downlink digital signal.

As shown in FIG. 2 to FIG. 4, the first device 10 includes the digital processing unit 101. Step 301 may be performed by the digital processing unit 101. For a specific execution process, refer to the related descriptions of the digital processing unit 101 in the foregoing device embodiments.

Step 302: Perform digital-to-analog conversion on the first downlink digital signal to obtain a first downlink analog radio frequency signal.

As shown in FIG. 2 to FIG. 4, the first device 10 further includes the first digital-to-analog conversion unit 102. Step 302 may be performed by the first digital-to-analog conversion unit 102. For a specific execution process, refer to the related descriptions of the first digital-to-analog conversion unit 102 in the foregoing device embodiments.

Step 303: Convert the first downlink analog radio frequency signal into a first downlink optical signal, and transmit the first downlink optical signal to a plurality of second devices.

As shown in FIG. 2 to FIG. 4, the first device 10 further includes the plurality of first optoelectronic units 103, and the plurality of first optoelectronic units 103 are configured to be connected to the plurality of second devices 20 in one-to-one correspondence. Step 303 may be performed by the plurality of first optoelectronic units 103. For a specific execution process, refer to the related descriptions of the plurality of first optoelectronic units 103 in the foregoing device embodiments.

Optionally, still refer to FIG. 13. The method may further include the following steps.

Step 304: Process a second downlink baseband signal transmitted by the BBU to obtain a second downlink digital signal.

Step 304 may be performed by the digital processing unit 101. For a specific execution process, refer to the related descriptions of the digital processing unit 101 in the foregoing device embodiments.

Step 305: Perform digital-to-analog conversion on the second downlink digital signal to obtain a second downlink analog radio frequency signal.

As shown in FIG. 3 and FIG. 4, the first device 10 further includes the second digital-to-analog conversion unit 105. Step 305 may be performed by the second digital-to-analog conversion unit 105. For a specific execution process, refer to the related descriptions of the second digital-to-analog conversion unit 105 in the foregoing device embodiments.

Step 306: Convert the second downlink analog radio frequency signal into a second downlink optical signal, and transmit the second downlink optical signal to a plurality of second devices.

As shown in FIG. 3 and FIG. 4, the first device 10 further includes the plurality of second optoelectronic units 106, and the plurality of second optoelectronic units 106 are connected to the plurality of second devices 20 in one-to-one correspondence. Step 306 may be performed by the plurality of second optoelectronic units 106. For a specific execution process, refer to the related descriptions of the plurality of second optoelectronic units 106 in the foregoing device embodiments.

Optionally, as shown in FIG. 3 and FIG. 4, the first device 10 may further include the selection unit 104. The selection unit 104 may separately transmit the second downlink analog radio frequency signal transmitted by the second digital-to-analog conversion unit 105 to the plurality of second optoelectronic units 106. Each second optoelectronic unit 106 may further convert the received second downlink analog radio frequency signal into a second downlink optical signal, and then transmit the second downlink optical signal to one connected second device.

Correspondingly, an implementation process of step 303 may include: The first digital-to-analog conversion unit 102 separately transmits the first downlink analog radio frequency signal to the plurality of first optoelectronic units 103 through the selection unit 104, and each first optoelectronic unit 103 converts the received first downlink analog radio frequency signal into the first downlink optical signal and transmits the first downlink optical signal to one connected second device.

Optionally, the first downlink baseband signal includes a signal of a first cell, and does not include a signal of a second cell; and the second downlink baseband signal includes the signal of the second cell, and does not include the signal of the first cell.

Optionally, the first downlink digital signal includes a third downlink digital signal and a fourth downlink digital signal; and step 302 may specifically include:
Step 302a: Perform digital-to-analog conversion on the third downlink digital signal to obtain a third downlink analog radio frequency signal.
Step 302b: Perform digital-to-analog conversion on the fourth downlink digital signal to obtain a fourth downlink analog radio frequency signal. A frequency band of the third downlink analog radio frequency signal is different from a frequency band of the fourth downlink analog radio frequency signal.

Optionally, step 303 may specifically include:
Step 303a: Combine the first downlink analog radio frequency signal and a downlink analog signal.
Step 303b: Convert the combined signal into a first downlink optical signal.

A frequency band of the downlink analog signal is different from a frequency band of the first downlink analog radio frequency signal, and the downlink analog signal includes at least one of the following signals: a control signal used to control a working status of the second device, and a network signal from an IP gateway.

As shown in FIG. 4, the first device 10 further includes a combiner unit 108 and a signal transmission unit 109. The signal transmission unit 109 is configured to transmit the downlink analog signal. Step 303a may be performed by the combiner unit 108. For a specific execution process of step 303a, refer to the related descriptions of the combiner unit 108 in the foregoing device embodiments. Step 303b may be performed by one first optoelectronic unit 103.

Optionally, still refer to FIG. 13. The method may further include the following steps.

Step 307: Adjust a working status of at least one unit of the first device according to a power consumption adjustment instruction transmitted by the BBU.

Step 307 may be performed by the digital processing unit 101. For a specific execution process, refer to the related descriptions of the digital processing unit 101 in the foregoing device embodiments.

It may be understood that a sequence of the steps of the signal transmission method provided in the foregoing embodiment may be properly adjusted, and the steps may also be correspondingly added or deleted based on a situation. For example, step 304 to step 306 may be performed before step 303 or may be deleted, and step 307 may be performed before step 306 or may be deleted based on a situation.

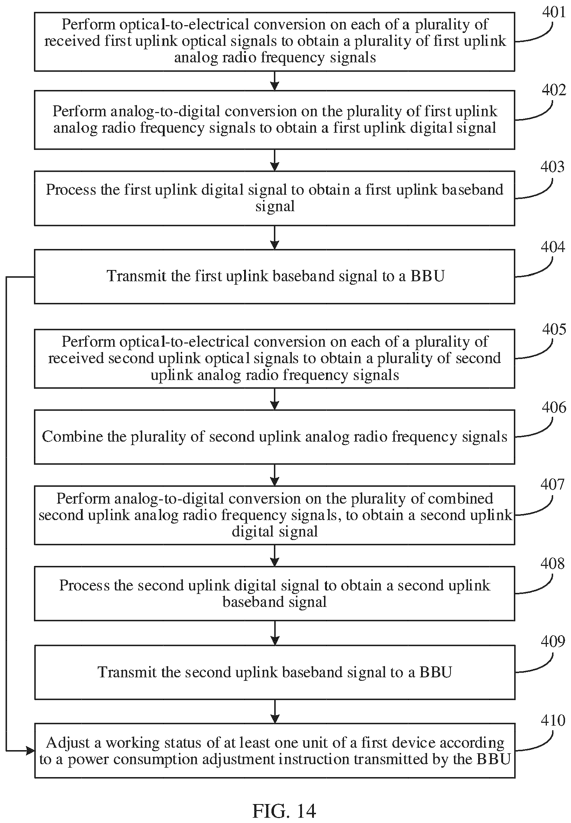

An embodiment of this application provides another signal transmission method, which may be applied to the first device shown in FIG. 5 and FIG. 6 provided in the foregoing embodiments. As shown in FIG. 14, the method includes the following steps.

Step 401: Perform optical-to-electrical conversion on each of a plurality of received first uplink optical signals to obtain a plurality of first uplink analog radio frequency signals.

As shown in FIG. 5 and FIG. 6, the first device 10 includes a plurality of first optoelectronic units 103, and the plurality of first optoelectronic units 103 are configured to be connected to a plurality of second devices 20 in one-to-one correspondence. Step 401 may be performed by the plurality of first optoelectronic units 103. For a specific execution process, refer to the related descriptions of the plurality of first optoelectronic units 103 in the foregoing device embodiments. It may be understood that each first optoelectronic unit 103 is configured to receive one first uplink optical signal transmitted by one second device, and is configured to perform optical-to-electrical conversion on the first uplink optical signal to obtain one first uplink analog radio frequency signal.

Step 402: Perform analog-to-digital conversion on the plurality of first uplink analog radio frequency signals, to obtain a first uplink digital signal.

As shown in FIG. 5 and FIG. 6, the first device 10 further includes a first analog-to-digital conversion unit 111. Step 402 may be performed by the first analog-to-digital conversion unit 111. For a specific execution process, refer to the related descriptions of the first analog-to-digital conversion unit 111 in the foregoing device embodiments.

Step 403: Process the first uplink digital signal to obtain a first uplink baseband signal.

Step 404: Transmit the first uplink baseband signal to a BBU.

As shown in FIG. 5 and FIG. 6, the first device 10 further includes the digital processing unit 101. Both step 403 and step 404 may be performed by the digital processing unit 101. For a specific execution process, refer to the related descriptions of the digital processing unit 101 in the foregoing device embodiments.

Optionally, still refer to FIG. 14. The method may further include the following steps.

Step 405: Perform optical-to-electrical conversion on each of a plurality of received second uplink optical signals to obtain a plurality of second uplink analog radio frequency signals;
As shown in FIG. 6, the first device 10 further includes the plurality of second optoelectronic units 106, and the plurality of second optoelectronic units 106 are connected to a plurality of second devices 20 in one-to-one correspondence. Step 405 may be performed by the plurality of second optoelectronic units 106. For a specific execution process, refer to the related descriptions of the plurality of second optoelectronic units 106 in the foregoing device embodiments. It may be understood that each second optoelectronic unit 106 is configured to receive one second uplink optical signal transmitted by one second device, and is configured to perform optical-to-electrical conversion on the second uplink optical signal to obtain one second uplink analog radio frequency signal.

Step 406: Combine the plurality of second uplink analog radio frequency signals.

As shown in FIG. 6, the first device 10 may further include the selection unit 104. Step 406 may be performed by the selection unit 104. For a specific execution process, refer to the related descriptions of the selection unit 104 in the foregoing device embodiments.

Step 407: Perform analog-to-digital conversion on the plurality of combined second uplink analog radio frequency signals, to obtain a second uplink digital signal.

As shown in FIG. 6, the first device 10 may further include the second analog-to-digital conversion unit 112. Step 407 may be performed by the second analog-to-digital conversion unit 112. For a specific execution process, refer to the related descriptions of the second analog-to-digital conversion unit 112 in the foregoing device embodiments.

Step 408: Process the second uplink digital signal to obtain a second uplink baseband signal.

Step 409: Transmit the second uplink baseband signal to the BBU.

Both step 408 and step 409 may be performed by the digital processing unit 101. For a specific execution process, refer to the related descriptions of the digital processing unit 101 in the foregoing device embodiments.

Optionally, step 402 may specifically include:

Step 402a: Combine the plurality of first uplink analog radio frequency signals.

Step 402b: Perform analog-to-digital conversion on the plurality of combined first uplink analog radio frequency signals, to obtain a first uplink digital signal.

Step 402a may be performed by the selection unit 104. For a specific execution process, refer to the related descriptions of the selection unit 104 in the foregoing device embodiments. Step 402b may be performed by the first analog-to-digital conversion unit 111.

Optionally, the first uplink analog radio frequency signal includes a signal of a first cell, and does not include a signal of a second cell; and the second uplink analog radio frequency signal includes the signal of the second cell, and does not include the signal of the first cell.

Optionally, the first uplink analog radio frequency signal includes a third uplink analog radio frequency signal and a fourth uplink analog radio frequency signal, and a frequency band of the third uplink analog radio frequency signal is different from a frequency band of the fourth uplink analog radio frequency signal. Correspondingly, step 402 may specifically include:
Step 402c: Perform analog-to-digital conversion on a third uplink analog radio frequency signal in each first uplink analog radio frequency signal to obtain a third uplink digital signal.
Step 402d: Perform analog-to-digital conversion on a fourth uplink analog radio frequency signal in each first uplink analog radio frequency signal to obtain a fourth uplink digital signal.

Optionally, signals obtained through the optical-to-electrical conversion on at least one first uplink optical signal further include an uplink analog signal, and a frequency band of the uplink analog signal is different from a frequency band of a first uplink analog radio frequency signal transmitted by one first optoelectronic unit. The uplink analog signal includes at least one of the following signals: a signal that is reported by one second device and that indicates a working status of the second device; and a network signal that is reported by the second device and that is from an IP device.

As shown in FIG. 6, the first device 10 further includes the splitter unit 114 and the signal transmission unit 109. The splitter unit 114 is configured to: transmit the first uplink analog radio frequency signal to the first analog-to-digital conversion unit, and transmit the uplink analog signal to the signal transmission unit 109. Optionally, still refer to FIG. 14. The method may further include the following steps.

Step 410: Adjust a working status of at least one unit of the first device according to a power consumption adjustment instruction transmitted by the BBU.

Step 410 may be performed by the digital processing unit 101. For a specific execution process, refer to the related descriptions of the digital processing unit 101 in the foregoing device embodiments.

It may be understood that a sequence of the steps of the signal transmission method provided in the foregoing embodiment may be properly adjusted, and the steps may also be correspondingly added or deleted based on a situation. For example, step 405 to step 409 may be performed before step 404 or may be deleted, and step 410 may be performed before step 409 or may be deleted based on a situation.

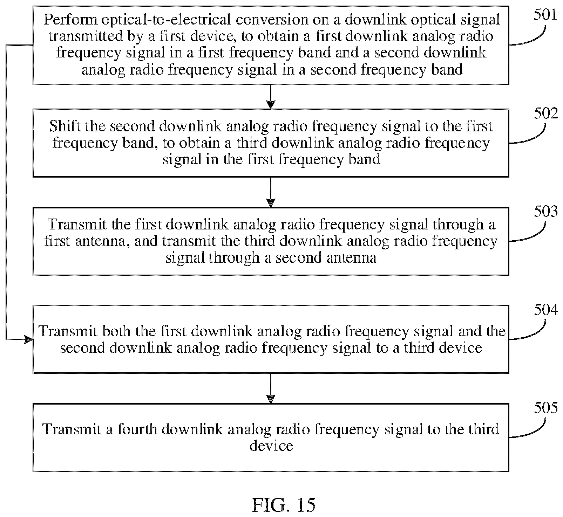

An embodiment of this application provides still another signal transmission method, which may be applied to the second device shown in FIG. 7 and FIG. 8 provided in the foregoing embodiments. The second device has a first antenna and a second antenna. As shown in FIG. 15, the method includes the following steps.

Step 501: Perform optical-to-electrical conversion on a downlink optical signal transmitted by a first device, to obtain a first downlink analog radio frequency signal in a first frequency band and a second downlink analog radio frequency signal in a second frequency band.

As shown in FIG. 7 and FIG. 8, the second device 20 includes the optoelectronic unit 201. Step 501 may be performed by the optoelectronic unit 201. For a specific execution process, refer to the related descriptions of the optoelectronic unit 201 in the foregoing device embodiments.

Step 502: Shift the second downlink analog radio frequency signal to the first frequency band, to obtain a third downlink analog radio frequency signal in the first frequency band.

As shown in FIG. 7 and FIG. 8, the second device 20 further includes the data processing unit 202. Step 502 may be performed by the data processing unit 202. For a specific execution process, refer to the related descriptions of the data processing unit 202 in the foregoing device embodiments.

Step 503: Transmit the first downlink analog radio frequency signal through the first antenna, and transmit the third downlink analog radio frequency signal through the second antenna.

As shown in FIG. 7 and FIG. 8, the second device 20 further includes the signal transmit unit 203. The signal transmit unit 203 has the first antenna and the second antenna. Step 503 may be performed by the signal transmit unit 203. For a specific execution process, refer to the related descriptions of the signal transmit unit 203 in the foregoing device embodiments.

Optionally, still refer to FIG. 15. The method may further include the following steps.

Step 504: Transmit both the first downlink analog radio frequency signal and the second downlink analog radio frequency signal to a third device.

As shown in FIG. 8, the second device 20 may further include the coupling unit 204 and the cascading interface unit 205. The cascading interface unit 205 is configured to be connected to the third device. Step 504 may be performed by the coupling unit 204 and the cascading interface unit 205. For a specific execution process, refer to the related descriptions of the coupling unit 204 and the cascading interface unit 205 in the foregoing device embodiments.

Optionally, signals obtained through the optical-to-electrical conversion on the downlink optical signal in step 501 may further include a fourth downlink analog radio frequency signal in a third frequency band. As shown in FIG. 15, the method further includes:
Step 505: Transmit the fourth downlink analog radio frequency signal to the third device.

Neither the signal processed by the second device nor the signal transmitted by the second device includes the fourth downlink analog radio frequency signal. Step 505 may alternatively be performed by the coupling unit 204 and the cascading interface unit 205. For a specific execution process, refer to the related descriptions of the coupling unit 204 and the cascading interface unit 205 in the foregoing device embodiments.

It may be understood that a sequence of the steps of the signal transmission method provided in the foregoing embodiment may be properly adjusted, and the steps may also be correspondingly added or deleted based on a situation. For example, at least one of step 504 and step 505 may be deleted based on a situation; or step 505 may be performed synchronously with step 504, or performed before step 504.

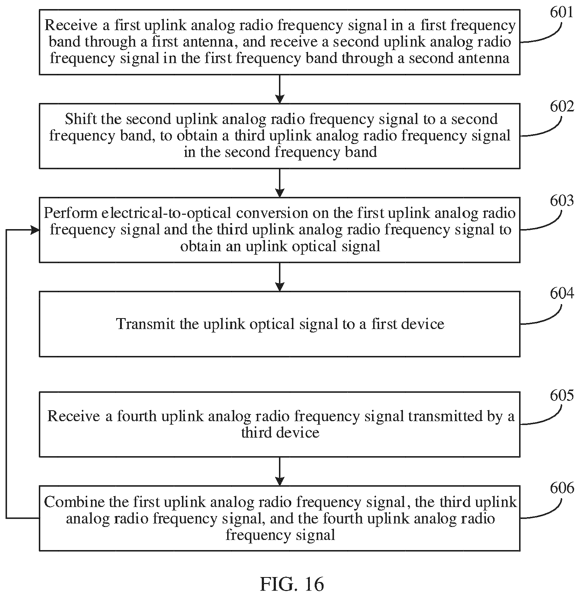

An embodiment of this application provides yet another signal transmission method, which may be applied to the second device shown in FIG. 8 and FIG. 9 provided in the foregoing embodiments. The second device has a first antenna and a second antenna. As shown in FIG. 16, the method may include the following steps.

Step 601: Receive a first uplink analog radio frequency signal in a first frequency band through the first antenna, and receive a second uplink analog radio frequency signal in the first frequency band through the second antenna.

As shown in FIG. 8 and FIG. 9, the second device 20 includes a signal receive unit 211, and the signal receive unit 211 has the first antenna and the second antenna. Step 601 may be performed by the signal receive unit 211. For a specific execution process, refer to the related descriptions of the signal receive unit 211 in the foregoing device embodiments.

Step 602: Shift the second uplink analog radio frequency signal to a second frequency band, to obtain a third uplink analog radio frequency signal in the second frequency band.

As shown in FIG. 8 and FIG. 9, the second device 20 further includes the data processing unit 202. Step 602 may be performed by the data processing unit 202. For a specific execution process, refer to the related descriptions of the data processing unit 202 in the foregoing device embodiments.

Step 603: Perform electrical-to-optical conversion on the first uplink analog radio frequency signal and the third uplink analog radio frequency signal to obtain an uplink optical signal.

Step 604: Transmit the uplink optical signal to a first device.

As shown in FIG. 8 and FIG. 9, the second device 20 further includes the optoelectronic unit 201, and the optoelectronic unit 201 is configured to be connected to the first device through an optical fiber. Both step 603 and step 604 may be performed by the optoelectronic unit 201. For a specific execution process, refer to the related descriptions of the optoelectronic unit 201 in the foregoing device embodiments.

Optionally, still refer to FIG. 16. The method may further include the following steps.

Step 605: Receive a fourth uplink analog radio frequency signal transmitted by a third device.

As shown in FIG. 8, the second device 20 further includes a cascading interface unit 205. The cascading interface unit 205 is configured to be connected to the third device. Step 605 may be performed by the cascading interface unit 205. For a specific execution process, refer to the related descriptions of the cascading interface unit 205 in the foregoing device embodiments.

Step 606: Combine the first uplink analog radio frequency signal, the third uplink analog radio frequency signal, and the fourth uplink analog radio frequency signal.

As shown in FIG. 8, the second device 20 further includes the combiner unit 212. Step 606 may be performed by the combiner unit 212. For a specific execution process, refer to the related descriptions of the combiner unit 212 in the foregoing device embodiments.

Correspondingly, step 603 may specifically include: performing electrical-to-optical conversion on the combined analog radio frequency signals to obtain the uplink optical signal. A frequency band of the fourth radio frequency signal is different from the first frequency band and is different from the second frequency band; or a frequency band of the fourth radio frequency signal includes at least one of the first frequency band and the second frequency band.

It may be understood that a sequence of the steps of the signal transmission method provided in the foregoing embodiment may be properly adjusted, and the steps may also be correspondingly added or deleted based on a situation. For example, step 605 and step 606 may be deleted based on a situation.

A person skilled in the art may clearly understand that, for a purpose of convenient and brief description, for detailed implementation processes of the foregoing described signal transmission methods, refer to the corresponding processes in the foregoing device embodiments. Details are not described herein again.

All or some of the technical solutions provided in this application may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like. In embodiments of this application, when there is no logical conflict, the embodiments may be mutually referenced.

In this application, the term "at least one" means one or more, the term "a plurality of" means two or more in this application, and the terms "system" and "network" in this specification may be often used interchangeably.

The "and/or" mentioned in this specification indicates that three relationships may exist. For example, A and/or B may indicate: the following three cases: Only A exists, both A and B exist, and only B exists. The character "/" generally represents an "or" relationship between the associated objects.

The foregoing descriptions are merely optional embodiments of this application, but are not intended to limit this application. The protection scope of this application is subject to the claims.

## Claims

1. A first device, wherein the first device comprises a digital processing unit, a first digital-to-analog conversion unit, and a plurality of first optoelectronic units, wherein
the digital processing unit is configured to: process a first downlink baseband signal transmitted by a baseband unit to obtain a first downlink digital signal, and transmit the first downlink digital signal to the first digital-to-analog conversion unit;
the first digital-to-analog conversion unit is configured to: perform digital-to-analog conversion on the first downlink digital signal to obtain a first downlink analog radio frequency signal, and separately transmit the first downlink analog radio frequency signal to the plurality of first optoelectronic units; and
the plurality of first optoelectronic units are connected to a plurality of second devices in one-to-one correspondence, and each of the plurality of first optoelectronic units is configured to: convert the first downlink analog radio frequency signal into a first downlink optical signal and transmit the first downlink optical signal to one connected second device.

2. The first device according to claim 1, wherein the first device further comprises a selection unit, a second digital-to-analog conversion unit, and a plurality of second optoelectronic units, wherein
the digital processing unit is further configured to: process a second downlink baseband signal transmitted by the baseband unit to obtain a second downlink digital signal, and transmit the second downlink digital signal to the second digital-to-analog conversion unit;
the second digital-to-analog conversion unit is configured to perform digital-to-analog conversion on the second downlink digital signal to obtain a second downlink analog radio frequency signal;
the selection unit is configured to separately transmit the second downlink analog radio frequency signal to the plurality of second optoelectronic units; and
the plurality of second optoelectronic units are connected to a plurality of second devices in one-to-one correspondence, and each of the plurality of second optoelectronic units is configured to: convert the second downlink analog radio frequency signal into a second downlink optical signal and transmit the second downlink optical signal to one connected second device.

3. The first device according to claim 2, wherein that the first digital-to-analog conversion unit separately transmits the first downlink analog radio frequency signal to the plurality of first optoelectronic units specifically comprises:
separately transmitting, by the first digital-to-analog conversion unit, the first downlink analog radio frequency signal to the plurality of first optoelectronic units through the selection unit.

4. The first device according to claim 2 or 3, wherein the first downlink baseband signal comprises a signal of a first cell, and does not comprise a signal of a second cell; and
the second downlink baseband signal comprises the signal of the second cell, and does not comprise the signal of the first cell.

5. The first device according to any one of claims 1 to 4, wherein the first downlink digital signal comprises a third downlink digital signal and a fourth downlink digital signal; and
that the first digital-to-analog conversion unit performs digital-to-analog conversion on the first downlink digital signal to obtain a first downlink analog radio frequency signal specifically comprises:
performing, by the first digital-to-analog conversion unit, digital-to-analog conversion on the third downlink digital signal to obtain a third downlink analog radio frequency signal; and
performing, by the first digital-to-analog conversion unit, digital-to-analog conversion on the fourth downlink digital signal to obtain a fourth downlink analog radio frequency signal, wherein
a frequency band of the third downlink analog radio frequency signal is different from a frequency band of the fourth downlink analog radio frequency signal.

6. The first device according to any one of claims 1 to 5, wherein the first device further comprises a combiner unit and a signal transmission unit, wherein
the signal transmission unit is configured to transmit a downlink analog signal; and
the combiner unit is configured to: combine the first downlink analog radio frequency signal and the downlink analog signal, and transmit the combined signal to one of the plurality of first optoelectronic units, wherein a frequency band of the downlink analog radio frequency signal is different from a frequency band of the first downlink analog radio frequency signal, wherein
the downlink analog signal comprises at least one of the following signals:
a control signal used to control a working status of one second device connected to the first optoelectronic unit; and
a network signal from an internet protocol IP gateway.

7. The first device according to any one of claims 1 to 6, wherein
the baseband unit is further configured to transmit a power consumption adjustment instruction to the digital processing unit; and
the digital processing unit is further configured to adjust a working status of at least one unit of the first digital-to-analog conversion unit and the plurality of first optoelectronic units according to the power consumption adjustment instruction.

8. A first device, wherein the first device comprises a plurality of first optoelectronic units, a first analog-to-digital conversion unit, and a digital processing unit, wherein
the plurality of first optoelectronic units are connected to a plurality of second devices in one-to-one correspondence, and each of the plurality of first optoelectronic units is configured to perform optical-to-electrical conversion on a first uplink optical signal transmitted by one connected second device, to obtain a first uplink analog radio frequency signal;
the first analog-to-digital conversion unit is configured to perform analog-to-digital conversion on first uplink analog radio frequency signals transmitted by the plurality of first optoelectronic units, to obtain a first uplink digital signal; and
the digital processing unit is configured to: process the first uplink digital signal to obtain a first uplink baseband signal, and transmit the first uplink baseband signal to a baseband unit.

9. The first device according to claim 8, wherein the first device further comprises a selection unit, a second analog-to-digital conversion unit, and a plurality of second optoelectronic units, wherein
the plurality of second optoelectronic units are connected to a plurality of second devices in one-to-one correspondence, and each of the plurality of second optoelectronic units is configured to perform optical-to-electrical conversion on a second uplink optical signal transmitted by one connected second device, to obtain a second uplink analog radio frequency signal;
the selection unit is configured to: combine second uplink analog radio frequency signals transmitted by the plurality of second optoelectronic units, and then transmit the combined second uplink analog radio frequency signals to the second analog-to-digital conversion unit;
the second analog-to-digital conversion unit is configured to perform analog-to-digital conversion on the combined second uplink analog radio frequency signals, to obtain a second uplink digital signal; and
the digital processing unit is further configured to: process the second uplink digital signal to obtain a second uplink baseband signal, and transmit the second uplink baseband signal to the baseband unit.

10. The first device according to claim 9, wherein the selection unit is further configured to: combine the first uplink analog radio frequency signals transmitted by the plurality of first optoelectronic units, and then transmit the combined first uplink analog radio frequency signals to the first analog-to-digital conversion unit; and
that the first analog-to-digital conversion unit performs analog-to-digital conversion on first uplink analog radio frequency signals transmitted by the plurality of first optoelectronic units, to obtain a first uplink digital signal specifically comprises:
performing, by the first analog-to-digital conversion unit, analog-to-digital conversion on the combined first uplink analog radio frequency signals to obtain the first uplink digital signal.

11. The first device according to claim 9 or 10, wherein the first uplink analog radio frequency signal comprises a signal of a first cell, and does not comprise a signal of a second cell; and
the second uplink analog radio frequency signal comprises the signal of the second cell, and does not comprise the signal of the first cell.

12. The first device according to any one of claims 8 to 11, wherein the first uplink analog radio frequency signal comprises a third uplink analog radio frequency signal and a fourth uplink analog radio frequency signal, and a frequency band of the third uplink analog radio frequency signal is different from a frequency band of the fourth uplink analog radio frequency signal; and
that the first analog-to-digital conversion unit performs analog-to-digital conversion on first uplink analog radio frequency signals transmitted by the plurality of first optoelectronic units, to obtain a first uplink digital signal specifically comprises:
performing, by the first analog-to-digital conversion unit, analog-to-digital conversion on third uplink analog radio frequency signals transmitted by the plurality of first optoelectronic units, to obtain a third uplink digital signal; and
performing, by the first analog-to-digital conversion unit, analog-to-digital conversion on fourth uplink analog radio frequency signals transmitted by the plurality of first optoelectronic units, to obtain a fourth uplink digital signal.

13. The first device according to any one of claims 8 to 12, wherein signals obtained through the optical-to-electrical conversion performed by one of the plurality of first optoelectronic units on a first uplink optical signal transmitted by one connected second device further comprise an uplink analog signal, and a frequency band of the uplink analog signal is different from a frequency band of the first uplink analog radio frequency signal transmitted by the first optoelectronic unit; and
the first device further comprises a splitter unit and a signal transmission unit, wherein
the splitter unit is configured to: transmit the first uplink analog radio frequency signal transmitted by the first optoelectronic unit to the first analog-to-digital conversion unit, and transmit the uplink analog signal to the signal transmission unit; and
the uplink analog signal comprises at least one of the following signals:
a signal that is reported by the second device connected to the first optoelectronic unit and that indicates a working status of the second device; and
a network signal that is reported by the second device connected to the first optoelectronic unit and that is from an internet protocol IP device.

14. The first device according to any one of claims 8 to 13, wherein
the baseband unit is further configured to transmit a power consumption adjustment instruction to the digital processing unit; and
the digital processing unit is further configured to adjust a working status of at least one unit of the first analog-to-digital conversion unit and the plurality of first optoelectronic units according to the power consumption adjustment instruction.

15. A second device, wherein the second device comprises an optoelectronic unit, a data processing unit, and a signal transmit unit, wherein
the optoelectronic unit is configured to: be connected to a first device, and perform optical-to-electrical conversion on a downlink optical signal transmitted by the first device, to obtain a first downlink analog radio frequency signal in a first frequency band and a second downlink analog radio frequency signal in a second frequency band;
the data processing unit is configured to shift the second downlink analog radio frequency signal to the first frequency band, to obtain a third downlink analog radio frequency signal in the first frequency band; and
the signal transmit unit has a first antenna and a second antenna, and the signal transmit unit is configured to: transmit the first downlink analog radio frequency signal through the first antenna, and transmit the third downlink analog radio frequency signal through the second antenna.

16. The second device according to claim 15, wherein the second device further comprises a coupling unit and a cascading interface unit, wherein
the coupling unit is configured to: separately transmit the first downlink analog radio frequency signal to the data processing unit and the cascading interface unit, and separately transmit the second downlink analog radio frequency signal to the data processing unit and the cascading interface unit; and
the cascading interface unit is configured to: be connected to a third device, and transmit the first downlink analog radio frequency signal and the second downlink analog radio frequency signal to the third device.

17. The second device according to claim 16, wherein signals obtained through the optical-to-electrical conversion performed by the optoelectronic unit on the downlink optical signal further comprise a fourth downlink analog radio frequency signal in a third frequency band;
the coupling unit is further configured to separately transmit the fourth downlink analog radio frequency signal to the data processing unit and the cascading interface unit; and
the cascading interface unit is further configured to transmit the fourth downlink analog radio frequency signal to the third device, wherein
neither the signal processed by the data processing unit nor the signal transmitted by the signal transmit unit comprises the fourth downlink analog radio frequency signal.

18. A second device, wherein the second device comprises a signal receive unit, a data processing unit, and an optoelectronic unit, wherein
the signal receive unit has a first antenna and a second antenna, and the signal receive unit is configured to: receive a first uplink analog radio frequency signal in a first frequency band through the first antenna, and receive a second uplink analog radio frequency signal in the first frequency band through the second antenna;
the data processing unit is configured to shift the second uplink analog radio frequency signal to a second frequency band, to obtain a third uplink analog radio frequency signal in the second frequency band; and
the optoelectronic unit is configured to: be connected to a first device, and perform electrical-to-optical conversion on the first uplink analog radio frequency signal and the third uplink analog radio frequency signal to obtain an uplink optical signal, and transmit the uplink optical signal to the first device.

19. The second device according to claim 18, wherein the second device further comprises a cascading interface unit and a combiner unit, wherein
the cascading interface unit is configured to: be connected to a third device, and receive a fourth uplink analog radio frequency signal transmitted by the third device; and
the combiner unit is configured to: combine the first uplink analog radio frequency signal, the third uplink analog radio frequency signal, and the fourth uplink analog radio frequency signal, and transmit the combined signal to the optoelectronic unit; and
that the optoelectronic unit performs electrical-to-optical conversion on the first uplink analog radio frequency signal and the third uplink analog radio frequency signal to obtain an uplink optical signal specifically comprises:
performing, by the optoelectronic unit, electrical-to-optical conversion on the combined analog radio frequency signals transmitted by the combiner unit, to obtain the uplink optical signal, wherein
a frequency band of the fourth radio frequency signal is different from the first frequency band and is different from the second frequency band; or a frequency band of the fourth radio frequency signal comprises at least one of the first frequency band and the second frequency band.

20. A wireless access system, wherein the system comprises a baseband unit, a first device, and a plurality of second devices, wherein
the first device is the first device according to any one of claims 1 to 7, and each of the plurality of second devices is the second device according to any one of claims 15 to 17; or
the first device is the first device according to any one of claims 8 to 14, and each of the plurality of second devices is the second device according to claim 18 or 19.

21. The system according to claim 20, wherein the system further comprises a third device, wherein
the third device is cascaded to one of the plurality of second devices through an optical fiber or a cable.

22. The system according to claim 21, wherein each of the plurality of second devices is configured to: receive and transmit an analog radio frequency signal within a first frequency band range, and the third device is configured to: receive and transmit an analog radio frequency signal within a second frequency band range, wherein
the first frequency band range and the second frequency band range do not overlap.

23. The system according to any one of claims 20 to 22, wherein the system further comprises an IP gateway and an IP device, wherein
the IP gateway is connected to the first device, and the IP device is connected to one of the plurality of second devices.

24. The system according to any one of claims 20 to 23, wherein the system further comprises a fourth device, a multiplexer, a demultiplexer, and a fifth device, wherein
the fourth device is configured to transmit a first optical signal to the multiplexer;
the multiplexer is configured to: multiplex the first optical signal and a plurality of second optical signals transmitted by the first device, and transmit the multiplexed signals to the demultiplexer, wherein a wavelength of the first optical signal is different from wavelengths of the plurality of second optical signals; and
the demultiplexer is configured to: demultiplex the multiplexed signal transmitted by the multiplexer, transmit the first optical signal obtained through the demultiplexing to the fifth device, and transmit, in one-to-one correspondence, the plurality of second optical signals obtained through the demultiplexing to the plurality of second devices, wherein
the first optical signal is obtained through electrical-to-optical conversion on at least one of the following signals: a network signal and a digital baseband signal.

25. A signal transmission method, applied to a first device side, wherein the method comprises:
processing a first downlink baseband signal transmitted by a baseband unit to obtain a first downlink digital signal;
performing digital-to-analog conversion on the first downlink digital signal to obtain a first downlink analog radio frequency signal; and
converting the first downlink analog radio frequency signal into a first downlink optical signal and transmitting the first downlink optical signal to a plurality of second devices.

26. The method according to claim 25, wherein the method further comprises:
processing a second downlink baseband signal transmitted by the baseband unit to obtain a second downlink digital signal;
performing digital-to-analog conversion on the second downlink digital signal to obtain a second downlink analog radio frequency signal; and
converting the second downlink analog radio frequency signal into a second downlink optical signal, and transmitting the second downlink optical signal to a plurality of second devices.

27. The method according to claim 25 or 26, wherein the converting the first downlink analog radio frequency signal into a first downlink optical signal specifically comprises:
combining the first downlink analog radio frequency signal and a downlink analog signal; and
converting the combined signal into the first downlink optical signal, wherein
a frequency band of the downlink analog signal is different from a frequency band of the first downlink analog radio frequency signal, and the downlink analog signal comprises at least one of the following signals:
a control signal used to control a working status of one of the plurality of second devices; and
a network signal from an internet protocol IP gateway.

28. A signal transmission method, applied to a first device side, wherein the method comprises:
performing optical-to-electrical conversion on each of a plurality of received first uplink optical signals to obtain a plurality of first uplink analog radio frequency signals;
performing analog-to-digital conversion on the plurality of first uplink analog radio frequency signals, to obtain a first uplink digital signal;
processing the first uplink digital signal to obtain a first uplink baseband signal; and
transmitting the first uplink baseband signal to a baseband unit.

29. The method according to claim 28, wherein the method further comprises:
performing optical-to-electrical conversion on each of a plurality of received second uplink optical signals to obtain a plurality of second uplink analog radio frequency signals;
combining the plurality of second uplink analog radio frequency signals;
performing analog-to-digital conversion on the plurality of combined second uplink analog radio frequency signals, to obtain a second uplink digital signal;
processing the second uplink digital signal to obtain a second uplink baseband signal; and
transmitting the second uplink baseband signal to the baseband unit.

30. The method according to claim 28 or 29, wherein signals obtained through optical-to-electrical conversion on at least one first uplink optical signal further comprise an uplink analog signal, and a frequency band of the uplink analog signal is different from a frequency band of the first uplink analog radio frequency signal, wherein
the uplink analog signal comprises at least one of the following signals:
a signal that is reported by one second device and that indicates a working status of the second device; and
a network signal that is reported by one second device and that is from an internet protocol IP device.

31. A signal transmission method, applied to a second device side, wherein the second device has a first antenna and a second antenna, and the method comprises:
performing optical-to-electrical conversion on a downlink optical signal transmitted by a first device, to obtain a first downlink analog radio frequency signal in a first frequency band and a second downlink analog radio frequency signal in a second frequency band;
shifting the second downlink analog radio frequency signal to the first frequency band, to obtain a third downlink analog radio frequency signal in the first frequency band; and
transmitting the first downlink analog radio frequency signal through the first antenna, and transmitting the third downlink analog radio frequency signal through the second antenna.

32. The method according to claim 31, wherein the method further comprises:
transmitting both the first downlink analog radio frequency signal and the second downlink analog radio frequency signal to a third device.

33. The method according to claim 31 or 32, wherein signals obtained through the optical-to-electrical conversion on the downlink optical signal further comprise a fourth downlink analog radio frequency signal in a third frequency band; and the method further comprises:
transmitting the fourth downlink analog radio frequency signal to the third device, wherein
neither the signal processed by the second device nor the signal transmitted by the second device comprises the fourth downlink analog radio frequency signal.

34. A signal transmission method, applied to a second device side, wherein a second device has a first antenna and a second antenna, and the method comprises:
receiving a first uplink analog radio frequency signal in a first frequency band through the first antenna, and receiving a second uplink analog radio frequency signal in the first frequency band through the second antenna;
shifting the second uplink analog radio frequency signal to a second frequency band, to obtain a third uplink analog radio frequency signal in the second frequency band;
performing electrical-to-optical conversion on the first uplink analog radio frequency signal and the third uplink analog radio frequency signal, to obtain an uplink optical signal; and
transmitting the uplink optical signal to a first device.

35. The method according to claim 34, wherein the method further comprises:
receiving a fourth uplink analog radio frequency signal transmitted by a third device;
combining the first uplink analog radio frequency signal, the third uplink analog radio frequency signal, and the fourth uplink analog radio frequency signal; and
the performing electrical-to-optical conversion on the first uplink analog radio frequency signal and the third uplink analog radio frequency signal, to obtain an uplink optical signal specifically comprises:
performing electrical-to-optical conversion on the combined analog radio frequency signals, to obtain the uplink optical signal, wherein
a frequency band of the fourth radio frequency signal is different from the first frequency band and is different from the second frequency band; or a frequency band of the fourth radio frequency signal comprises at least one of the first frequency band and the second frequency band.

36. A computer-readable storage medium, wherein the computer-readable storage medium stores instructions; and when the instructions are run on a computer, the computer is enabled to perform the method according to any one of claims 25 to 35.

37. A computer program product, comprising instructions, wherein when the instructions are run on a computer, the computer is enabled to perform the method according to any one of claims 25 to 35.
